# EUROPEAN PATENT APPLICATION

(11) **EP 4 769 276 A1**
(43) Date of publication of application: **01.07.2026**
(21) Application number: 25215029.7
(22) Date of filing: 11.11.2025
(51) Int. Cl.: G06Q 20/40

(54) **EXPLAINABLE FRAUD DETECTION ALERTS**

(30) Priority: 30.12.2024 US 202419005583
(71) Applicant: Intuit Inc., Mountain View, CA 94043 (US)
(72) Inventor: DIETRICH, David, Mountain View, 94043 (US); GULSBY, Emily, Mountain View, 94043 (US); ZION, Danny, Mountain View, 94043 (US); SAGAR, Mihir, Mountain View, 94043 (US); SMITH, Christopher, Mountain View, 94043 (US)
(74) Representative: D Young & Co LLP

(57) **Abstract**

Certain aspects of the disclosure provide a method for fraud detection. The method may include obtaining a plurality of fraud detection rule combinations, each fraud detection rule combination of the plurality of fraud detection rule combinations having an assigned risk level, wherein each fraud detection rule combination comprises a combination of two or more individual fraud detection rules; receiving transaction data associated with an account; identifying, from the plurality of fraud detection rule combinations, one or more fraud detection rule combinations triggered by the transaction data, and generating a consolidated risk score for the account by aggregating the assigned risk levels of each triggered fraud detection rule combination; and generating a fraud alert when the consolidated risk score exceeds a threshold, wherein the fraud alert includes an explanation identifying the one or more fraud detection rule combinations that contributed to the consolidated risk score.

## Description

### BACKGROUND

### Field

Aspects of the present disclosure relate to fraud detection.

### Description of Related Art

Financial institutions and online service providers process large volumes of transactional and account-related data. Identifying fraudulent activities within this data remains a challenge due to the complexity and scale of modern financial systems. Traditional fraud detection methods often rely on static, rule-based logic configured to identify suspicious patterns based on a limited set of predefined conditions. While these conventional approaches may be suitable for detecting some simple or previously observed fraud scenarios, they tend to struggle when fraudsters evolve tactics or new illicit behaviors emerge. Conventional fraud detection systems that may rely on human-driven analysis can become overwhelmed by the number of alerts, many of which may be false positives, leading to inefficiencies and delayed responses.

Existing solutions further complicate matters by needing more flexibility to adapt detection criteria in response to changing environmental factors. For example, variations in user behavior due to seasonal shifts, periodic events, or evolving market conditions can alter regular activity patterns. Attempts to improve these systems by incorporating more complex rules and conditions can introduce additional computational overhead and management difficulties. As a result, identifying fraudulent transactions with precision and scalability remains a concern within the industry.

### SUMMARY

Certain aspects provide a method for fraud detection. In some aspects, the method may comprise: obtaining a plurality of fraud detection rule combinations, each fraud detection rule combination of the plurality of fraud detection rule combinations having an assigned risk level, wherein each fraud detection rule combination comprises a combination of two or more individual fraud detection rules; receiving transaction data associated with an account; identifying, from the plurality of fraud detection rule combinations, one or more fraud detection rule combinations triggered by the transaction data, and generating a consolidated risk score for the account by aggregating the assigned risk levels of each triggered fraud detection rule combination; and generating a fraud alert when the consolidated risk score exceeds a threshold, wherein the fraud alert includes an explanation identifying the one or more fraud detection rule combinations that contributed to the consolidated risk score.

Other aspects provide processing systems configured to perform the aforementioned methods as well as those described herein; computer-readable media encoding instructions that, when executed by a processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
FIG. 1 depicts an overview of a fraud detection and alert prioritization system architecture.
**FIG. 2** depicts a structure for generating and evaluating fraud detection rule combinations from baseline rules.
**FIG. 3** depicts a rules portfolio showing scoring information for rule combinations and their correlation with fraud patterns.
**FIG. 4** depicts a data aggregation process for combining multiple data sources into unified account profiles.
**FIG. 5** depicts an alert prioritization workflow for ranking and filtering fraud alerts.
**FIG. 6** depicts a process for transforming user-specific data into structured fraud alerts through feature generation and rule evaluation.
**FIG. 7** depicts an alert suppression mechanism for filtering and consolidating fraud alerts before investigator review.
**FIG. 8** depicts a feedback loop for refining fraud detection rules based on investigation outcomes.
**FIG. 9** depicts a system for adjusting rule risk scores based on historical performance metrics.
**FIG. 10** depicts a method for dynamically adjusting fraud detection rules based on seasonal patterns.
**FIG. 11** depicts a machine learning architecture for generating rule combinations from historical fraud data.
**FIG. 12** depicts a data structure for organizing fraud alerts with contextual information.
**FIG. 13** depicts a method flow for fraud detection using rule combinations and risk scoring.
**FIG. 14** depicts an example processing system with which aspects of the present disclosure can be performed.
**FIG. 15** depicts an example user interface illustrating one or more rule, in accordance with aspects of the present disclosure.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for detecting and prioritizing potentially fraudulent financial activities through dynamic rule combination evaluation and adaptive risk scoring.

Traditional fraud detection systems face several technical challenges including, but not limited to (1) inefficient processing of large volumes of transactional data and account related data, (2) difficulty in maintaining detection accuracy as fraud patterns evolve, (3) high rates of false positive alerts that can overwhelm investigators, and (4) the inability to adapt to seasonal variations in legitimate user activities.

Aspects of the present disclosure address these technical challenges by providing a fraud detection system that aggregates multiple data sources, converts complex patterns into binary features, evaluates these features against dynamically updated rule combinations, and prioritizes resulting alerts based on historical outcomes. In some aspects, the fraud detection system implements a binary feature generator that transforms complex, multi-dimensional data patterns into computationally efficient binary indicators. In some aspects, a binary feature generator processes aggregated account data, including transaction histories, behavioral metrics, and account attributes, to generate standardized binary flags or indicators. For example, a binary feature generator may evaluate whether an account's total withdrawal amount over 90 days exceeds a threshold, converting this continuous metric into a simple yes/no binary indicator. In some aspects, converting a continuous representation of data to a binary representation reduces the computational complexity of subsequent fraud detection rule evaluations while maintaining the meaning within the data.

In some aspects, the fraud detection system uses a dynamic rule combination generator based on machine learning techniques to create and refine multi-dimensional detection rules based on historical outcomes. In some aspects, the rule combination generator may analyze patterns in confirmed fraud cases to identify effective combinations of binary indicators that correlate with fraudulent activity. For instance, the rule combination generator may determine that the combination of a new account (e.g., indicated by account age less than 90 days), a high-value withdrawal, and login attempts from multiple geographic locations represents a high-risk pattern based on historical fraud data. The rule combination generator may update rule combinations and their associated risk scores based on investigator feedback and confirmed outcomes, thereby ensuring that fraudulent activity detection logic changes over time to capture emerging fraud tactics.

In some aspects, the fraud detection system implements an alert prioritization mechanism that ranks generated fraud alerts based on dynamically calculated risk scores derived from actual fraud patterns. In some aspects, multiple factors may be considered, including the historical fraud rate associated with triggered rule combinations, the potential financial impact of the suspicious activity, and an aggregate risk score computed from multiple triggered rules. In some aspects, the fraud detection system may utilize short-term (e.g., 30-day) and long-term (e.g., 6 months) performance metrics for each rule combination to help balance recent fraud trends against established fraud patterns. In some aspects, alert suppression logic may be implemented to prevent duplicate alerts and manage investigator workload.

In some aspects, the fraud detection system may incorporate seasonal threshold adjustments that automatically modify detection criteria based on historical trends and real-time activity. For example, the fraud detection system may analyze historical data to identify seasonal variations in financial activity, such as increased transactions and amounts during tax season or holiday periods. Based on these identified patterns, the fraud detection system can dynamically adjust rule thresholds and risk scores to maintain detection accuracy while reducing false positives during known high-activity periods.

Techniques described herein for dynamic fraud detection provide a technical solution to the problem of rigid, static rule-based detection systems. Using binary feature conversion and machine-learning-driven rule generation enables optimized, adaptive fraud detection based on evolving patterns and historical outcomes. Such techniques improve upon existing systems with fixed rules and thresholds. Further, integrating seasonal adjustments and real-time metrics facilitates dynamic decision-making capabilities that are not limited by logic.

Techniques described herein overcome the technical challenge of maintaining interpretability in machine learning-based fraud detection systems by combining binary feature transformation with explainable rule combinations. For example, fraudulent patterns can be decomposed and presented using discrete binary indicators. The discrete binary indicators can be used as documentation, explaining how these binary indicators combine to trigger alerts and indicate possible fraudulent activity. Each generated alert may include the specific triggered rule combinations, their historical true/false positive rates, seasonal context, and aggregate risk calculations. In some aspects, this approach enables human investigators to validate the machine learning system's logic, understand risk assessments, and provide informed feedback, improving fraud detection accuracy.

### Example Fraud Detection and Alert Prioritization System Architecture

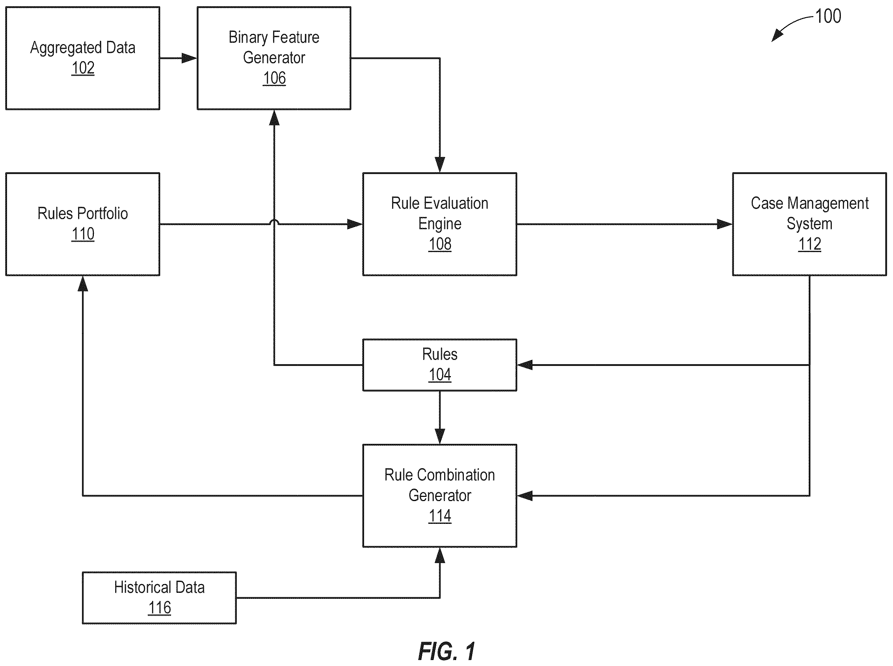

**FIG. 1** depicts an overview of a fraud detection and alert prioritization system 100 in accordance with some aspects of the present disclosure. In some aspects, the fraud detection and alert prioritization system 100 may be configured to identify, evaluate, prioritize, and respond to suspicious financial activities. In some aspects, the fraud detection and alert prioritization system 100 leverages aggregated data, extracts binary features, applies baseline rules and multi-way rule combinations and produces risk assessments that may generate actionable fraud alerts. Human investigators may review these fraud alerts through a case management system, and the outcomes of such reviews can feed back into the system as historical data. Over time, the fraud detection and alert prioritization system 100 may refine its rule portfolio and scoring logic, improving the detection process to identify and adapt to emerging fraud patterns and evolving operational priorities.

In some aspects, the fraud detection and alert prioritization system 100 acquires aggregated data 102, where aggregated data may refer to any structured or unstructured data that has been collected, combined, and preprocessed from multiple sources into a format for analysis. The aggregated data 102 may represent, for example, a consolidated dataset of account-level metrics, transaction summaries, customer profile attributes, and other behavioral signals. Aggregated data 102 may be derived from raw transaction logs, login histories, device fingerprints, external data feeds, and other sources. For example, aggregated data 102 may include metrics, such as total outbound transfers over the past 90 days, frequency of failed login attempts, or the presence of previously flagged suspicious entities within the account's payment network. By aggregating and normalizing these inputs, the fraud detection and alert prioritization system 100 enables subsequent components to reference account metrics without performing repetitive or on-demand queries, thereby enhancing computational efficiency and scalability.

Once aggregated data 102 is obtained, the fraud detection and alert prioritization system 100 may employ a binary feature generator 106 to transform the underlying account metrics into simplified binary features. In some aspects, each binary feature may represent a yes/no condition corresponding to a particular threshold or logical trigger derived from one or more rules 104. Rules 104 may include baseline rules and multi-way combination rules. In some aspects, a baseline rule may include a single criterion that, if met, indicates suspicious or risky behavior. Such baseline rules may originate from, for example, historical fraud analyses, subject matter expert knowledge, or regulatory guidelines. Examples of baseline rules include rules specifying temporal thresholds (e.g., "Account is less than 90 days old"), suspicious transactions (e.g., "Account transferred funds to a known high-risk external institution"), or behavioral anomalies (e.g., "Account accessed from multiple countries within the same week"). Additionally, demographic or environmental factors-such as account owner age or device attributes-may be translated into binary features to refine the detection process further.

To generate binary features, the binary feature generator 106 may compare the aggregated data 102 to one or more baseline rules. A baseline rule may refer to an individual condition, threshold, or criterion that can be independently evaluated against the aggregated data 102 to produce a binary indicator. For example, a baseline rule may state, "Account's total outbound transfers in the last 90 days exceed $3,000." Accordingly, the binary feature generator 106 may produce a binary indicator set to 1 if the threshold is met or 0 otherwise based on aggregated data 102. In some aspects, the binary features and the rules portfolio 110 may be provided to the rule evaluation engine 108. In some examples, the rules portfolio 110 may include baseline rules and multi-way combination rules. Multi-way combination rules may refer to rules that identify scenarios that may not be suspicious if only one baseline condition is met in isolation but become significant when multiple conditions occur together. For example, a multi-way combination might state, "Account is less than 90 days old" AND "Account transferred funds to a known high-risk external institution."

In some aspects, once the binary features are produced by the binary feature generator 106, the rule evaluation engine 108 compares these generated binary features against the rules stored in the rules portfolio 110. The rule evaluation engine 108 may apply a weighting or scoring methodology to determine an overall risk score for each account based on which rules of the rules portfolio 110 are triggered by the generated binary features based on the account-level aggregated data. For example, if an account triggers both "high-value withdrawal" (weight = 0.6) and "unusual login location" (weight = 0.4) rules, the rule evaluation engine 108 may calculate a combined risk score of 1.0 by summing the weights. If an account's binary features satisfy conditions associated with suspicious patterns-such as a known high-risk combination of rules-the rule evaluation engine 108 may assign an elevated risk score to the rule. As another example, if an account's binary features indicate that the account is less than 90 days old (a baseline rule) and that it has transferred more than $10,000 within the last week to a known high-risk external institution (another baseline rule), these two triggered conditions-when combined-may form a multi-way combination rule that signifies a higher level of suspicion. In such a case, the rule evaluation engine 108 may assign an elevated risk score reflecting both the presence of a newly opened account and a suspiciously large, high-risk transfer. If no suspicious combinations are detected, the risk score might remain low, indicating less cause for concern.

In some aspects, the rule evaluation engine 108 is further configured to incorporate external factors and operational constraints. For example, if the fraud detection and alert prioritization system 100 detects an increase in suspicious activity across many accounts, the fraud detection and alert prioritization system 100 may temporarily raise a threshold for triggering alerts to avoid overwhelming investigators. In another scenario, if investigator availability is limited, the fraud detection and alert prioritization system 100 may selectively prioritize alerts with the highest predicted recovery potential or align with known fraud typologies. Such typologies may include, for instance, patterns indicative of "account takeover" fraud (e.g., multiple unauthorized logins from new geographic locations), "phishing-related" fraud (e.g., sudden changes in contact information followed by high-value transfers), or "mule account" activities (e.g., rapid inbound and outbound transfers across multiple new accounts). As an example, if historical data shows account takeover attempts frequently result in high losses, alerts matching these patterns may receive higher priority when investigator resources are constrained. Such dynamic scoring helps to ensure that the fraud detection and alert prioritization system 100 is operational while maintaining its ability to identify important alerts.

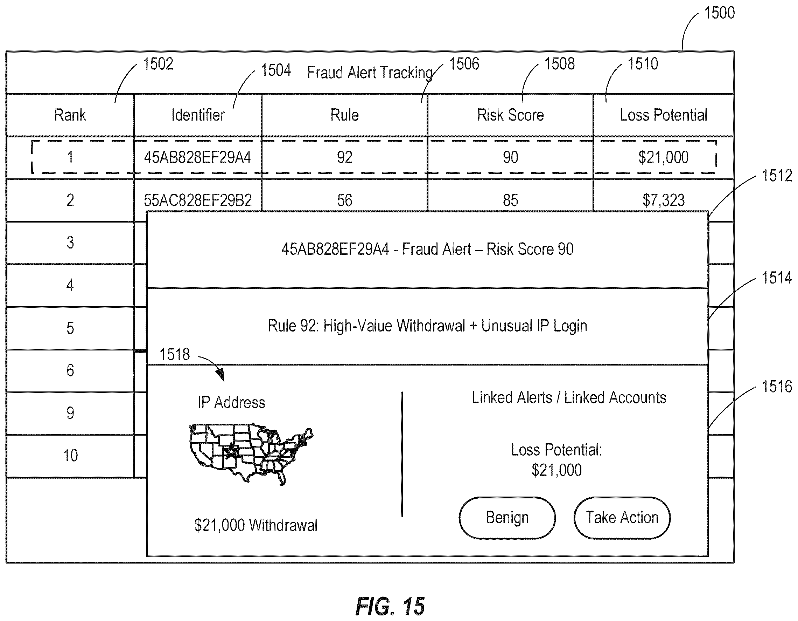

In some aspects, once the rule evaluation engine 108 determines that an account's aggregated risk score surpasses a threshold, the fraud detection and alert prioritization system 100 may generate an alert and route the alert to a case management system 112. In some aspects, the case management system may refer to a human investigator-facing platform that organizes, displays, and tracks alerts needing human intervention. By presenting fraud alerts in a ranked order, the case management system 112 can help human investigators focus on the most fraudulent cases. For example, the fraud alerts can be presented starting with those alerts having the highest consolidated risk scores, which may be calculated by combining weighted rule scores, historical fraud rates, and potential loss amounts associated with triggered rules. To enhance transparency and explainability, the fraud detection and alert prioritization system 100 may annotate alerts with explanatory notes, identifying the baseline and multi-way rule combinations that triggered the fraud alert. Such explanatory notes may enable investigators to rapidly understand the rationale behind each fraud alert and facilitate a faster and more accurate resolution. In some aspects, the case management system 112 may present alerts through a graphical user interface (GUI), for example, a dashboard displaying alerts in descending order of risk with color-coded indicators, accompanying explanatory notes, and collapsible sections detailing which rules contributed to the elevated risk. An example GUI is described with respect to **FIG. 15****.**

In some aspects, after investigators review and provide a disposition of the fraud alert (e.g., confirming fraud, clearing the account, requesting additional verification documents), the fraud alert outcome may be recorded in the historical data 116 repository. If certain rule combinations are confirmed to be fraudulent, a triggered rule may be modified (e.g., weights and thresholds may be incrementally adjusted). Conversely, if investigator feedback indicates that a particular triggered rule is a false positive, the fraud detection and alert prioritization system 100 may downrank a rule, reducing the likelihood of the alert in subsequent detection cycles. In some aspects, this continuous feedback loop ensures that the fraud detection and alert prioritization system 100 evolves to align its detection logic with real-world outcomes as provided by human reviewers.

In some aspects, the fraud detection and alert prioritization system 100 supports iterative refinement of the rules portfolio 110 and the use of new data sources. As new data sources emerge-such as external watchlists, updated device reputation scores, or novel payment channels-a baseline rule in the rules 104 can be created and integrated into the fraud detection and alert prioritization system 100. As an example, the aggregated data 102 may incorporate a new data source, and the binary feature generator 106 may generate new binary features that may be based on these new data sources. For example, if a new device reputation scoring service is added, the binary feature generator 106 could create features like "device_risk_score > 80" or "device_used_in_past_fraud = true," converting the continuous and categorical device reputation data into binary indicators that can be evaluated alongside existing features. As another example, if a new external watchlist flags certain IP addresses as high-risk, the binary feature generator 106 could set a binary feature set to 1 when an account's login originates from a listed IP address and 0 otherwise.

In some aspects, the fraud detection and alert prioritization system 100 includes a rule combination generator 114 configured to create, refine, and maintain the rules portfolio 110, including baseline and multi-way combination rules. In some aspects, the rule combination generator may automatically analyze rules 104, historical data 116, and observed account behaviors to identify patterns of suspicious activity. In some aspects, the rule combination generator 114 leverages machine learning algorithms, statistical methods, and/or pattern recognition techniques to identify previously unknown relationships between individual baseline rules. In some examples, machine learning algorithms may refer to neural networks, random forests, or gradient boosting classifiers. In some aspects, the machine learning algorithms may be used to detect complex, non-linear relationships between multiple baseline rules, allowing the system to identify intricate fraud patterns (such as identifying that a high withdrawal frequency combined with multiple foreign IP logins and irregular account age strongly correlates with fraud).

In some aspects, one or more statistical methods (e.g., correlation analysis or logistic regression) may be used. In some aspects, the one or more statistical methods may quantify the strength of relationships between individual rules, helping the system to prioritize which rules or combinations have historically shown the strongest association with confirmed fraud cases. For example, a statistical correlation test might reveal that accounts with at least three failed login attempts followed by a large outbound transfer are significantly more likely to be fraudulent.

In some aspects, pattern recognition techniques including, but not limited to, clustering or principal component analysis may be used. Pattern recognition techniques may reduce data complexity and group similar rule-triggered behaviors together. By clustering rule triggers, the system may discover new fraud types-such as a cluster of accounts exhibiting unusually high login attempts combined with sudden balance fluctuations. Accordingly, a rule can be refined or a new multi-way rule combination may be proposed.

By integrating these approaches, the rule combination generator 114 can uncover previously unknown relationships, continually refining the rules portfolio to adapt to emerging threats and improving the overall accuracy of fraud detection.

In operation, the rule combination generator 114 may receive the inputs of the rules 104, some of which reflect a single suspicious condition. The rule combination generator 114 may also obtain the historical data 116, capturing past system outcomes, confirmed fraud cases, false positives, and investigator feedback. By examining patterns over time, including how often certain baseline rules occur in genuine fraud cases, the rule combination generator 114 can propose multi-way combination rules that combine two or more baseline conditions. For example, while a single baseline rule-such as "Account is less than 90 days old"-might not alone be indicative of fraud, combining it with another rule-such as "Account transferred funds to a known high-risk external institution"-can highlight a previously overlooked scenario with a substantially higher fraud likelihood.

In some aspects, the rule combination generator 114 may continuously update and expand the rules portfolio 110. This portfolio may encompass the baseline rules and new multi-way combination rules generated based on evolving patterns in historical data 116. By periodically re-evaluating historical account outcomes, the rule combination generator 114 may identify that certain rule combinations, once benign, have begun to show statistically significant correlations with confirmed fraud incidents. For instance, a rule combination that previously demonstrated a strong correlation with fraud (e.g., above a threshold correlation coefficient of 0.7) might be retained or even given greater weight. Conversely, if a formerly high-risk rule combination's correlation with fraud drops below a certain threshold over time (e.g., declining to a correlation coefficient of 0.2 or lower), the combination may be downranked or retired. Such dynamic adjustment helps to ensure that the rules portfolio 110 remains aligned with current fraud patterns, continually refining its predictive accuracy...

In some aspects, the rule combination generator 114 may assign weights, scores, or priorities to the generated multi-way combination rules. For instance, the fraud detection and alert prioritization system 100 may initially treat a newly discovered combination with a provisional weight. Over time, as more outcomes are observed and recorded in the historical data 116, the rule combination generator 114 may adjust the weight of that combination. A combination of baseline rules that consistently appear in confirmed fraud cases may be assigned a higher weight, increasing the likelihood that the rule evaluation engine 108 will generate an alert when both conditions are met. Conversely, a multi-way combination rule that yields many false positives may reduce its influence in future scoring cycles.

In some aspects, the rule combination generator 114 may be configured to handle an expanding feature space. As the binary feature generator 106 integrates additional data sources or new baseline rules are introduced, the number of potential multi-way combination rules grows substantially. Instead of needing manual intervention to filter through these possibilities, the rule combination generator 114 can evaluate combinations, identifying only those multi-way patterns that exhibit meaningful fraud correlations. Accordingly, this discovery process allows the fraud detection and alert prioritization system 100 to incorporate a large number of baseline rules and efficiently evaluate many more multi-way rule combinations.

### Example Rule Combination Generation Architecture

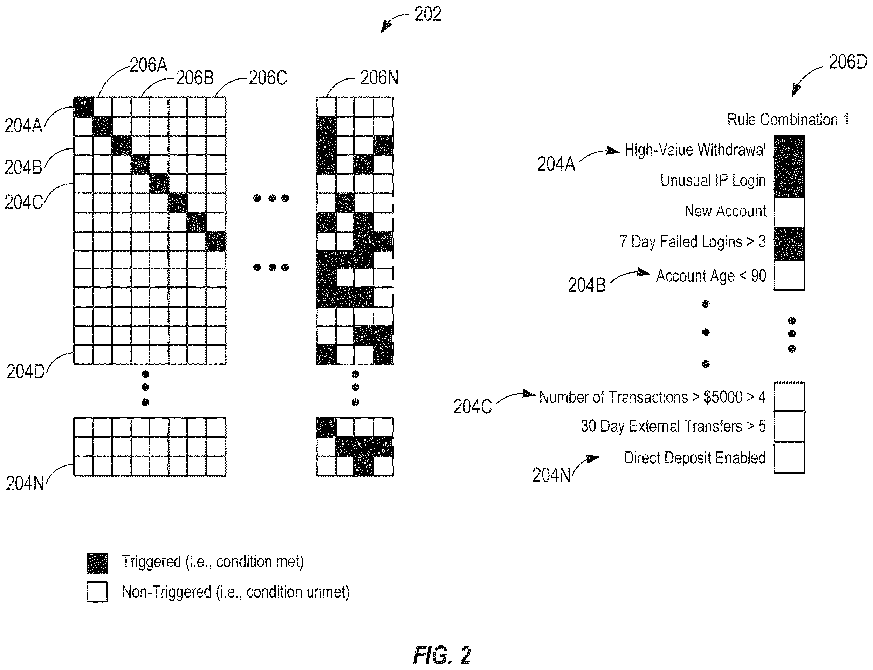

**FIG. 2** illustrates an example of possible rule combinations 202, some of which are a baseline set of rules 204 from which higher-order rule combinations (e.g., 206) may be generated and evaluated. In some examples, the rule combination generator 114 (**FIG. 1**) may generate possible rule combinations 202 comprising a baseline set of rules 204 and multi-way combination rules (e.g., multi-way combination rule 206D-206N). In some aspects, each rule within the baseline set of rules 204 represents an individual rule definition specifying a particular condition or criterion related to account behavior or transaction patterns. An individual rule (e.g., 204A-204N) may be selectively combined into multi-way combination rules (e.g., multi-way combination rule 206D-206N) to improve fraud detection. By leveraging these baseline set of rules 204 and their derived combination rules (e.g., multi-way combination rule 206D-206N), a fraud detection system can more accurately prioritize alerts and identify suspicious financial activities. For illustrative purposes, black squares within the depicted grids may represent triggered (i.e., met) conditions for a given rule, while white squares may represent non-triggered (i.e., unmet) conditions. By analyzing how these individual conditions combine to form more complex patterns, a fraud detection system can more accurately prioritize alerts and identify suspicious activities.

In some aspects, the baseline set of rules 204 represents a library of conditions that may be applied to aggregated account data. For instance, each rule (e.g., 204A-N) within the baseline set of rules 204 might represent different types of triggers, such as but not limited to: (1) a threshold event referring to a rule that may activate when a specific quantitative limit is exceeded (e.g., "Account's total outgoing transfers exceed $5,000 within 30 days"); (2) situational factor referring to a rule that may consider conditions tied to particular circumstances or patterns (e.g., "Account accessed from more than three distinct IP addresses in 24 hours"); or (3) a temporal condition referring to a rule that may trigger based on time-related criteria (e.g., "Account is less than 90 days old"). Variations in the baseline set of rules 204 may include rules related to account age, transaction volume, login locations, network patterns, and other risk-relevant indicators. Over time, these baseline rules can be updated or expanded to reflect changes in fraud tactics, regulatory requirements, or evolving business logic.

Each rule definition corresponds to an individual, standalone rule (e.g., 204A-N) extracted from the baseline set of rules 204. By way of example, rule definition 204A may represent a criterion such as "High-Value Withdrawal," which is triggered whenever a withdrawal transaction exceeding a monetary threshold is detected. Another example, rule definition 204B, could also be "Account Age < 90," indicating that the account was newly established within the last ninety days. Similarly, rule definition 204C might be "Number of Transactions over $5,000 > 4," signifying that more than four large-value transactions have occurred, while still another rule definition could focus on network anomalies or unusual IP addresses.

Each rule definition may evaluate aggregated or raw account data against its respective criterion. If the underlying account data satisfies the condition, the corresponding rule definition returns a positive indication (true), thereby possibly flagging the account for further scrutiny.

A rule combination 206A-206N represents a higher-order construct formed by logically combining two or more individual baseline rules (e.g., 204A-204N). Such combinations, which may be part of the rules portfolio 110 referenced in **FIG. 1****,** enable an assessment of account risk. As illustrated in **FIG. 2****,** a multi-way rule combination rule 206D-206N may be visually represented as a vertical selection or grouping of baseline rules 204A-204N. Although **FIG. 2** conceptually shows these triggers as binary states, in practice, each triggered rule within a combination may also carry an associated weight, allowing a system to prioritize certain combinations based on their historical correlation with fraudulent activity, average loss amounts, or investigator feedback.

By constructing these rule combinations (e.g., multi-way combination rule 206D-206N), the system may generate more accurate alerts. For instance, the single rule "High-Value Withdrawal" 204A might, on its own, have a moderate fraud likelihood, but when combined with "Unusual IP Login" and "Account Age < 90" into a three-way combination, the resultant rule combination (e.g., multi-way combination rule 206D-206N) could yield a higher risk score due to the convergence of multiple suspicious factors. Such multi-factor logic reduces alert noise and ensures investigators focus on the most fraudulent cases.

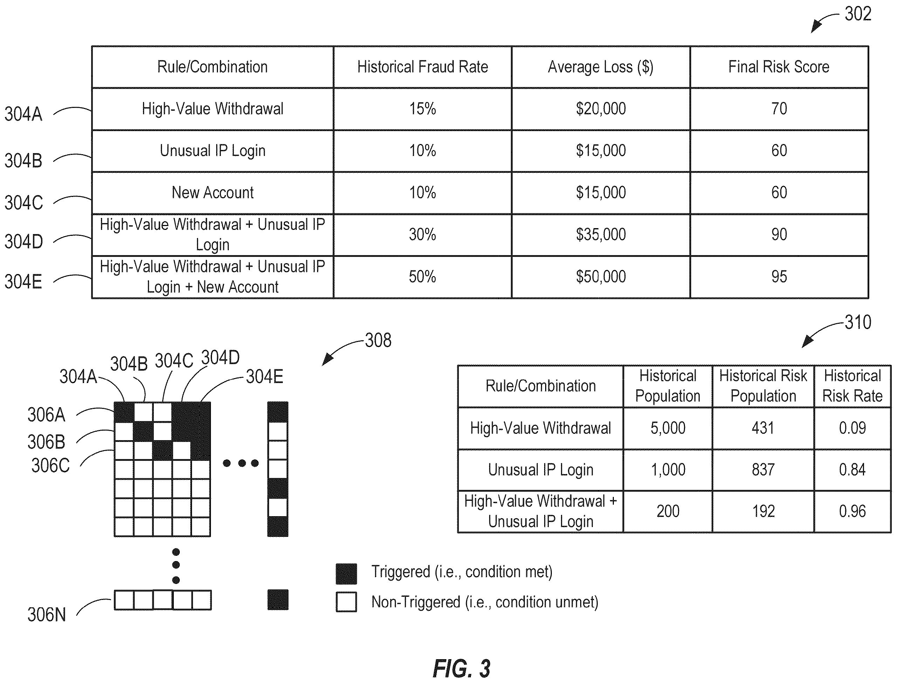

**FIG. 3** illustrates an example of rules portfolio 302, including fraud detection rules and their associated scoring information, along with representative multi-way rule combinations 304A-304N and their underlying baseline rules 306A-306N. In some aspects, the rules portfolio 302 may comprise a structured data set-such as a table-associating each individual rule or multi-way rule combination with historical fraud rates, average losses, and resultant risk scores. The example rules portfolio 302 may present several rules and combinations, each entry indicating how often it correlates with confirmed fraud (historical fraud rate), the typical monetary impact of such incidents (average loss), and metric representing overall risk level (final risk score). For example, a baseline rule (e.g., 304A: "High-Value Withdrawal") may exhibit a moderate historical fraud rate (e.g., 20%) and moderate average loss ($5,000), yielding a moderate final risk score of 0.4 calculated by normalizing and combining these factors. In contrast, a multi-way rule combination (e.g., 304E: "High-Value Withdrawal + Unusual IP Login + New Account") may have a substantially higher fraud rate (e.g., 60%) and loss history (e.g., $15,000), resulting in an elevated final risk score of 0.9 when these factors are weighted and combined. As another example, a final risk score may be obtained by applying a weighted formula that takes into account both historical fraud rate (e.g., the proportion of past incidents flagged by the rule that were confirmed as fraud) and average loss amounts (e.g., the mean unrecovered financial impact for those incidents). A simplified formula could be: Final Risk Score = (W_{f} * Fraud Rate) + (Wₗ * (Average Loss / Loss Normalization Factor)), where W_{f} and Wₗ are adjustable weights reflecting the relative importance of fraud rate and loss magnitude, and "Loss Normalization Factor" scales the loss values for consistency across different conditions.

In some aspects, the risk score may be based on an evaluation of each combination of rule against historical datasets to determine how many accounts meet all conditions simultaneously and how many of those accounts are historically correlated with confirmed fraud. For example, and as depicted in Table 310 of **FIG. 3****,** consider a historical dataset in which, over a defined period, 5,000 accounts triggered a baseline "High-Value Withdrawal" rule. Of these, 431 accounts may be confirmed as fraud cases, resulting in a historical fraud rate of approximately 9% for that individual rule. Separately, 1,000 accounts triggered an "Unusual Login Location" rule, of which 837 were historically identified as fraud cases, yielding an approximately 84% historical fraud rate for that rule. However, when examining accounts that simultaneously meet both conditions-"High-Value Withdrawal" AND "Unusual Login Location"-the number of qualifying accounts may shrink. For example, suppose that only 200 accounts meet both rules; out of those 200, 192 were historically associated with confirmed fraud. This combination-specific evaluation may yield a historical fraud rate of about 96% for the joint condition, which represents a derived measure based on overlapping historical attributes rather than an average or sum of the two individual rates. In some instances, the resulting fraud rate for a combination can be higher or lower than either component rule's rate, depending on how common the overlapping subset of accounts is and how many may be historically mapped to confirmed fraud events.

Each rule or combination 304A-304N represents a condition-or set of conditions-derived from the baseline rules as previously described with respect to **FIG. 2****.** These rules, individually or in combination, may be generated by the rule combination generator 114 (**FIG. 1**) and subsequently evaluated against historical data and investigator feedback. By doing so, a system can identify which patterns of account behavior-when observed together-tend to indicate elevated fraud risk.

In some aspects, the rule definitions 306A-306N correspond to the underlying logical conditions or binary triggers that serve as building blocks for the rules portfolio 302. Just as **FIG. 2** illustrated how individual baseline rules can form multi-way combinations, **FIG. 3** shows how these combinations are further assessed and scored. While the binary conditions in **FIG. 2** were depicted conceptually (e.g., black squares for triggered conditions and white squares for non-triggered conditions), **FIG. 3** progresses from that raw binary representation to an evaluated, scored portfolio.

The portfolio of rules for evaluation 308 depicts a source set of conditions and combinations that can be dynamically updated as new fraud patterns emerge. Initially, some combinations may lack historical data or established loss metrics. Over time, as more alerts are confirmed or dismissed, rules for evaluation 308 may be refined. A system can dynamically incorporate new rules, automatically learn combination weights through machine learning based on historical outcomes, and adjust final risk scores to reflect evolving fraud tactics and operational priorities. A system can rank accounts or transactions by associating each rule and combination with a final risk score, as shown in **FIG. 3****.** Alerts tied to rule combinations with high historical fraud rates and significant average losses may receive higher priority, ensuring that fraud investigators focus first on the more potentially significant fraud alerts.

### Example Data Aggregation and Feature Generation Process

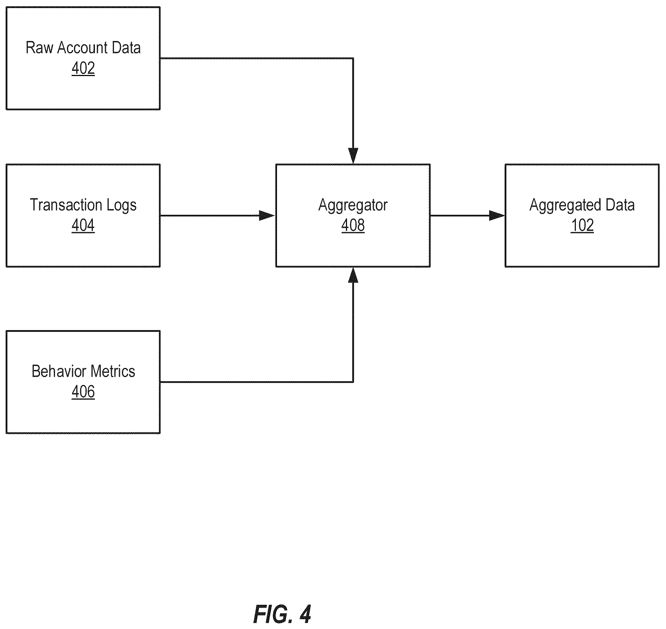

**FIG. 4** illustrates an example data aggregation process for generating aggregated data 102 in accordance with examples of the present disclosure. In some aspects, the aggregator 408 receives multiple data inputs-such as raw account data 402, transaction logs 404, and behavior metrics 406- and processes them into a unified, structured format. For example, the aggregator 408 may normalize data from various sources, map the data to a common schema, and combine resulting attributes into a single data record (e.g., a database entry or a feature vector) representing each account. In this manner, disparate inputs may be aligned and integrated into aggregated data 102, ensuring that subsequent components can efficiently reference a consistent set of account attributes without performing repetitive transformations or on-demand queries.. In some aspects, raw account data 402 comprises low-level, account-specific attributes, that may include ownership details, account age, balance, and other core identifiers sourced from primary banking systems. In some aspects, this data may establish a baseline profile of the account.

In some aspects, transaction logs 404 capture a detailed record of financial activities associated with the account, such as deposits, withdrawals, transfers, and payment history. When combined with raw account data 402, such events enable a system to detect anomalies or patterns characteristic of fraudulent behavior. The behavior metrics 406 may provide user-level behavioral indicators, such as login frequency, geolocation data, device characteristics, and session analytics. By relying on such data, a system can better distinguish between normal user behavior and suspicious behavior that may indicate fraud.

In some aspects, the aggregator 408 operates as a data integration and normalization layer to ensure that downstream components receive consistent, comparable inputs. For example, it may align timestamps by converting all recorded times to a single standardized format (e.g., Coordinated Universal Time), harmonize data schemas to ensure that fields (such as account IDs or transaction codes) follow uniform naming and structural conventions, and combine behavioral, transactional, and account-level information into the aggregated data 102 structure. In some examples, the raw data may be cleansed by removing duplicate entries, correcting malformed records, or reconciling inconsistencies in numeric fields, and enriched by adding external reference data such as high-risk IP address lists, geolocation risk scores, or device reputation metrics. As the system adapts to changing fraud patterns, the aggregator 408 can be updated to integrate additional data sources, incorporate new reference datasets (e.g., updated watchlists or threat intelligence feeds), or apply modified normalization rules (e.g., converting newly introduced regional time formats or normalizing recently added transaction attributes).

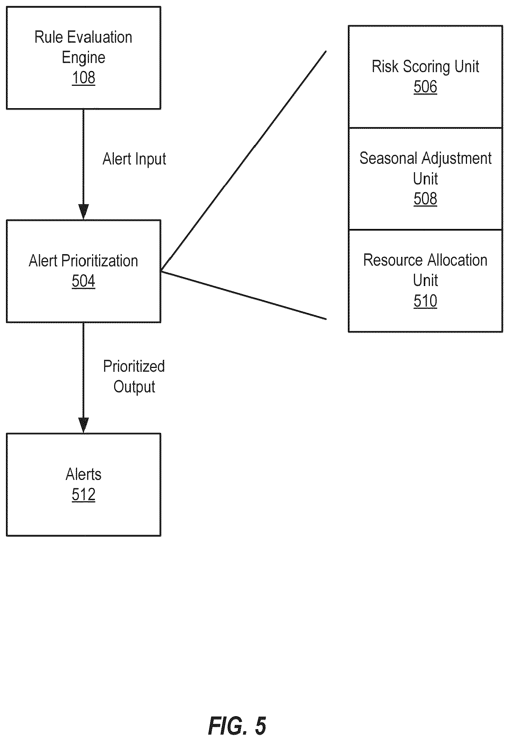

**FIG. 5** depicts an example process flow for prioritizing alerts within a fraud detection and alert prioritization system in accordance with examples of the present disclosure. FIG. 5 depicts data flow paths labeled to indicate the progression from initial alert generation to final prioritized output. Generated alerts flow from the rule evaluation engine 108 to the alert prioritization module 504 ("Alert Input"), which processes them using historical risk data, seasonal patterns, and investigator capacity constraints to produce a set of alerts 512 ("Prioritized Output") for further investigation. The alert prioritization module 504 is also shown with its internal components: a risk scoring unit 506 that calculates consolidated risk scores, a seasonal adjustment component 508 that modifies thresholds based on temporal patterns, and a resource allocation component 510 that balances alert volume against investigator capacity. In some aspects, only high-risk alerts may advance to human reviewers. As previously described, the rule evaluation engine 108 may evaluate which rules or multi-way combination rules are triggered and generate preliminary alerts, including initial risk scores or indicators reflecting the likelihood of fraudulent activity.

In some aspects, the alert prioritization module 504 receives these preliminary alerts and applies strategic filtering and ranking logic. In some aspects, this prioritization may consider dynamically calculated risk scores, historical fraud outcomes, investigator feedback, seasonal adjustments, or capacity limitations at the case management system 112 (**FIG. 1**). For example, if two accounts trigger similar rule combinations, but one account has a higher historical fraud correlation or a greater associated monetary risk, the alert prioritization module 504 may assign it a higher priority. Machine learning models or adaptive weighting schemes may refine the prioritization logic based on evolving fraud patterns and operational conditions in certain implementations.

In some aspects, the alerts 512 represent the final output of the alert prioritization module 504. Each alert may include explanatory context-such as which rule combinations contributed to the alert, historical performance metrics, and recommended follow-up actions. The explanatory context may better allow human investigators to understand why the alert was generated. With this information, investigators can initiate appropriate responses, ranging from contacting the account holder for verification to preemptively restricting certain account functionalities.

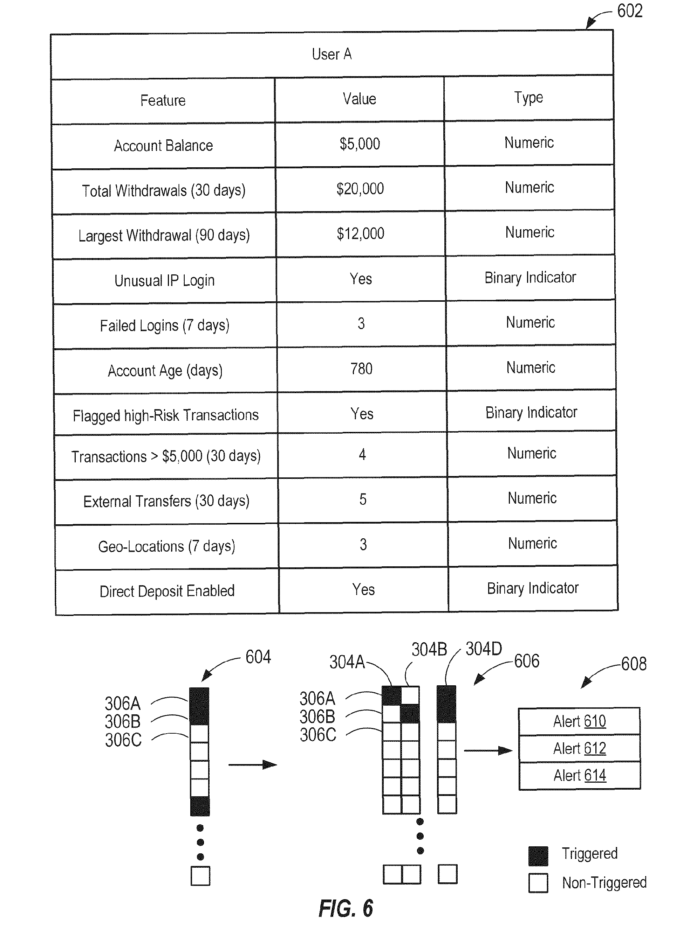

**FIG. 6** depicts an example of providing additional details directed to transforming user-specific aggregated data into actionable fraud alerts in accordance with examples of the present disclosure. More specifically, **FIG. 6** shows how raw or aggregated user-specific data 602 may be converted into standardized feature representations 604, evaluated through a set of rules and multi-way combination rules in a rules portfolio, and provide resulting features 606. The resulting features 606 may be evaluated and scored to generate one or more example alerts 608 (e.g., alerts 610-614).

The user-specific data 602 represents a dataset compiled for a particular user account. This aggregated data, which may originate from the aggregator (e.g., **FIG. 4**), combines raw account attributes, transaction records, and behavioral indicators. Examples include metrics such as account balance, total withdrawal amounts over specified timeframes, the largest withdrawal observed, login frequencies, failed login counts, account age, and the presence of direct deposit or external transfers. Certain fields, like "Flagged High-Risk Transactions," may already be binary indicators. In contrast, others-such as total withdrawals or number of geo-locations accessed-may be numerical values with varying degrees of significance.

The feature representation 604 translates the user-specific data 602 into a structured format suitable for rule evaluation and binary feature generation. For instance, numeric attributes (e.g., number of logins, amount withdrawn) can be compared against thresholds to yield binary true/false indicators. Continuous metrics may be normalized or bucketed to align with specific rule criteria. For example, a total withdrawal metric may be bucketed into ranges (0-1000, 1001-5000, 5000+) with each range generating a separate binary indicator. As another example, a login frequency might be normalized to a 0-1 scale relative to the account's historical patterns. By performing this translation, each data point of the user-specific data 602 may be converted into a consistent, machine-readable feature set for processing by the binary feature generator 106 and the rule evaluation engine 108 described in **FIG. 1****.**

The resulting features 606 reflects the outcome of applying baseline rules, multi-way rule combinations, and threshold checks to the structured feature set from 604. For example, a baseline rule (e.g., 306A) requiring "High-Value Withdrawal" would trigger a positive indicator if the user's data meets that criterion. Similarly, a multi-way combination rule (e.g., 30-DAY) such as "Unusual IP Login" combined with "High-Value Withdrawal" could trigger a multi-way rule combination.

Example alerts 608 (e.g., alerts 610, 612, 614) represent actionable outputs resulting from triggered rules in the features 606. These alerts each represent a distinct set of risk factors. For instance, alert 610 might correspond to a scenario where "High-Value Withdrawal" and "Unusual IP Login" conditions are both met. In contrast, alert 612 might represent "New Account + Large External Transfers," and alert 614 could highlight "Multiple Failed Logins + Rapid Outbound Transfers." In accordance with aspects of the present disclosure, example alerts 608 are explainable, each providing a clear rationale based on triggered conditions.

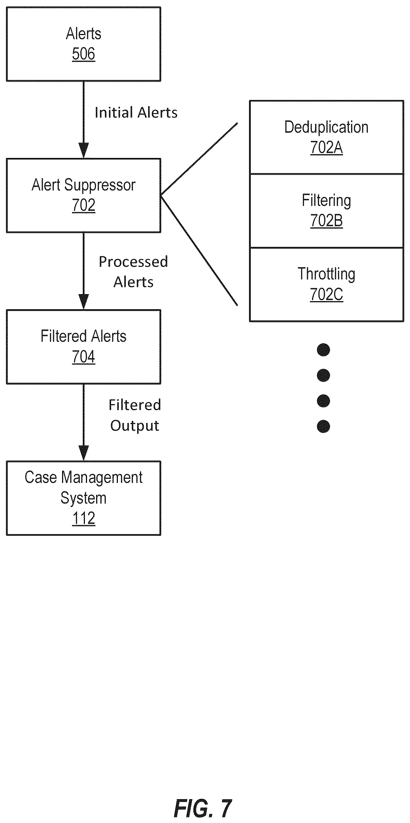

**FIG. 7** depicts an example directed to suppressing and filtering alerts before they are routed to a case management system 112 in accordance with examples of the present disclosure. FIG. 7 depicts, within a configurable time window, a filtering module that applies rule-based criteria to remove low-priority alerts, and a throttling controller that manages alert volume based on system capacity. As depicted in **FIG. 7****,** a set of initially generated alerts 512 may be passed to an alert suppressor 702. The alert suppressor 702 may refine the incoming stream of alerts by applying deduplication (e.g., combining multiple alerts for the same account within 24 hours) at 702A, filtering (e.g., removing alerts with risk scores below dynamic thresholds) at 702B, and throttling logic (e.g., rate-limiting alerts during high-volume periods) at 702C, resulting in a reduced set of filtered alerts 704. In some examples, the deduplication at 702A may remove repeated alerts triggered by the same rule and account within a short timeframe. In some examples, by removing repeated alerts, investigators do not see multiple identical alerts for the same issue. In some aspects, throttling logic may adjust the rate at which alerts flow to investigators during high-volume periods, preventing an overwhelming surge of notifications. For instance, if an unexpected data feed anomaly generates a large volume of similar alerts, throttling ensures that only a representative subset is passed onward. These filtered alerts 704 may then be provided to the case management system 112 so that human investigators can focus on high-value alerts without being overwhelmed by unnecessary alerts. Of course, other types of filtering or suppressing of alerts may be implemented.

In some aspects, alerts 512 represents all alerts generated by the rule evaluation engine 108 and possibly prioritized by the alert prioritization module 504 (**FIG. 5**). In some aspects, alerts 512 may include duplicate alerts for the same account (e.g., if the same alert was triggered on different days), repetitive low-risk triggers, or alerts that have become outdated by the time they reach the case management system 112.

In some aspects, the alert suppressor 702 may discard alerts that fail to meet certain risk thresholds, defer non-urgent alerts during periods of high transaction volume, or consolidate multiple alerts related to the same account into a single, more informative notification. In some aspects, the alert suppressor 702 may also rely on historical feedback. Historical feedback may refer to patterns, false positives, or investigator notes. By dynamically adjusting filtering criteria, the alert suppressor 702 can limit alerts such that the more important alerts advance to the case management system 112.

In some aspect, filtered alerts 704 are provided from the alert suppressor 702 as a more actionable subset of alerts from the alerts 512. Accordingly, these alerts may be higher in risk relevance, better timed, and more aligned with investigative priorities. Filtered alerts 704 may be organized by criteria such as risk score, suspected fraud category, or recent investigator feedback. The case management system 112 may receive filtered alerts 704 and present such alerts to human investigators. By presenting alerts already screened for redundancy, low relevance, and resource constraints (such as investigator availability and system capacity), the system allows investigators to respond more rapidly and accurately to diagnose and dispose of such alerts.

### Example Feedback Loop and System Refinement Process

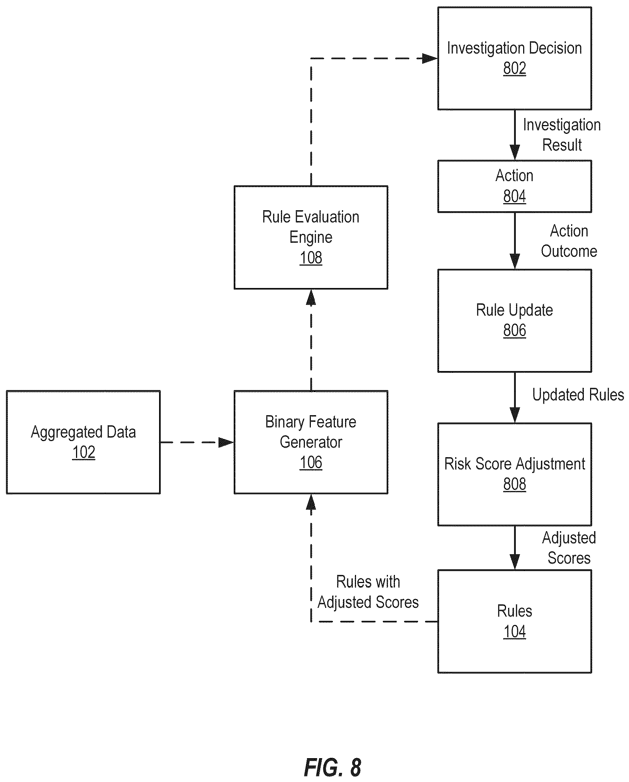

**FIG. 8** depicts an example feedback loop that relies on investigator outcomes to refine underlying fraud detection logic and scoring mechanisms in accordance with aspects of the present disclosure. In one implementation, an investigation decision 802 (e.g., confirming or dismissing a suspected fraud alert) prompts an action 804 ("investigation result"), such as adjusting account status or requesting additional verification documents. This action 804 ("action outcome") may in turn lead to a rule update 806 - (e.g., updated rules) where the system modifies underlying rules or thresholds based on the investigation's outcome. Subsequently, a corresponding risk score adjustment 808 is performed ("adjusted scores") to reflect the newly updated logic and historical results. By feeding these adjustments back into rule 104, the system completes a continuous cycle: as investigators make decisions and the system records outcomes, these insights inform future evaluations. Over time, this iterative loop ensures that the fraud detection system remains accurate, responsive, and capable of adapting to evolving fraud tactics.

In some aspects, the investigation decision 802 represents the conclusion reached by a human investigator (or, in some cases, an automated decision mechanism) after reviewing a particular alert. This decision might classify the alert as confirmed fraud, a false positive, or something that needs further analysis, review, or verification. The determination of the human investigator bridges a gap between automated detection and real-world judgment.

In some aspects, action 804 corresponds to the real-world measure taken due to the investigation decision 802. If an alert is disposed of as fraudulent, action 804 might include freezing the account, reversing suspicious transactions, or initiating additional authentication steps. If the alert is considered benign, action 804 could involve closing the alert without further intervention. For alerts that need additional information or follow-up, action 804 may include a request for additional documentation or user verification. Such actions may resolve the current alert and generate data to refine fraud detection logic.

In some aspects, rule update 806 may involve modifying a rules portfolio based on the outcomes of some investigations. For example, suppose a particular multi-way combination rule triggers an alert, such as "Frequent High-Value Withdrawals + Unusual IP Logins" which consistently leads to cases of confirmed fraud. Such a rule may be reinforced or weighted more heavily in that case. Conversely, if specific triggers repeatedly result in false alarms, the system may relax those conditions, add contextual checks, or adjust thresholds. By continuously refining the rules portfolio 110 (FIG. 1), the system can better differentiate between higher-risk scenarios and benign user behavior.

In some aspects, a risk score adjustment of 808 may recalibrate numerical risk values associated with individual rules or multi-way rule combinations. If an alert pattern appears to predict fraudulent activity, its associated risk score might increase and elevate future alerts of that pattern to a higher priority. Conversely, patterns linked with numerous false positives might see a reduction in their risk scores.

As previously discussed, rule 104 may represent the updated repository of detection logic and scoring parameters on which future evaluations are based. By integrating investigation decisions 802, actions 804, rule updates 806, and risk score adjustments 808, rule 104 can remain current even though fraud tactics may change. For example, rules with adjusted scores may be provided to the binary feature generator 106. The binary feature generator 106 may generate binary features based on aggregated data 102 using the rules with adjusted scores. In some examples, an investigation decision 802 may be based on the alert from the rule evaluation engine 108. Accordingly, an adaptive feedback loop, as depicted in **FIG. 8****,** can help ensure that a fraud detection system improves over time to provide accurate alerts and reduce false positives.

In some aspects, when investigator feedback (e.g., confirming or dismissing alerts) is received, the historical data may be revised to re-evaluate how certain rules and multi-way rule combinations align with confirmed fraud patterns. Using the approach described above with respect to **FIG. 3****,** where a combination of rules may be recalculated based on the overlapping population of accounts meeting all conditions of the rule combination, the assigned risk scores can be dynamically adjusted as needed. For instance, if historical outcomes indicate that a three-way combination (e.g., "High-Value Withdrawal" + "Unusual Login Location" + "New Account") consistently leads to confirmed fraud cases more often than previously measured, the risk score adjustment 808 can incorporate this new combination-specific historical risk rate to increase the weight of that combination. Conversely, if investigator feedback reveals that a certain combination, which previously appeared high-risk, frequently results in false positives, the recalculated historical rate (reflecting fewer verified fraud cases in that combination's account population) may be adjusted to lower that combination's risk influence accordingly.

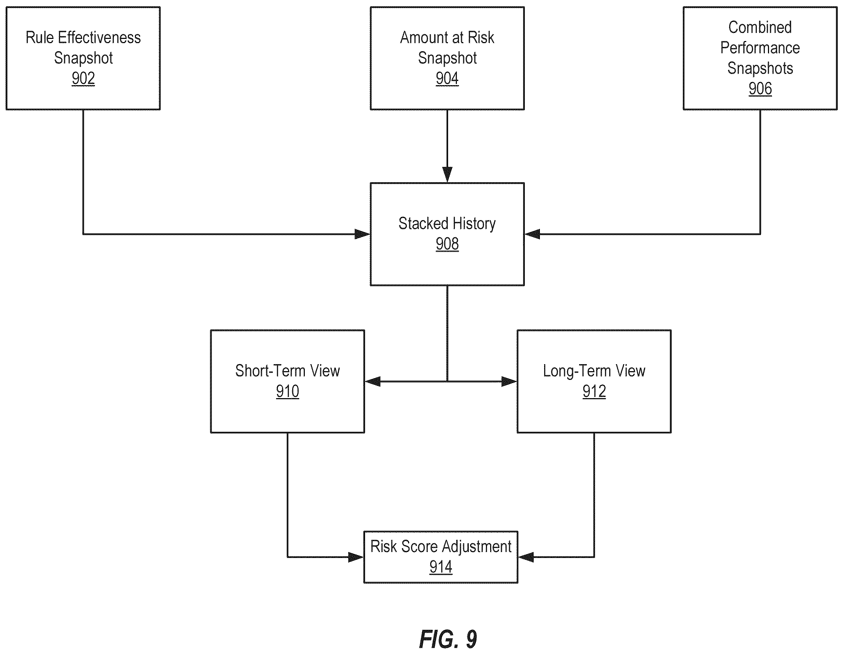

**FIG. 9** depicts techniques for dynamically adjusting risk scores associated with rules and rule combinations in a fraud detection system in accordance with aspects of the present disclosure. In some aspects, the system collects and organizes various performance metrics into a stacked history, which may refer to a data structure comprising multiple snapshots of rule performance indicators over different time intervals. By storing performance metrics in regularly updated time-based snapshots, the stacked history can be analyzed from both short-term and long-term perspectives enabling a system to optimize risk score adjustments and improve fraud detection accuracy over changing operational conditions.

In some aspects, rule effectiveness snapshot 902 captures metrics indicating how accurately specific rules or rule combinations identify fraudulent behavior. For example, over a defined interval, such as 30 days, the system tracks performance indicators including true positive rates (the proportion of confirmed fraud cases correctly identified), false positive rates (the proportion of non-fraud cases incorrectly flagged as fraud), and detection precision (the proportion of alerts generated that actually correspond to confirmed fraud). Thus, the rule effectiveness snapshot 902 may indicate whether a rule effectively distinguishes suspicious activity from normal user behavior. For instance, a rule combination requiring both high-value withdrawals and unusual IP login locations may demonstrate a 75% true positive rate over the past month. Conversely, if the same rule combination exhibits a high false positive rate during certain seasonal periods, such as tax season, the snapshot helps identify necessary threshold adjustments to maintain accuracy.

In some aspects, an amount at risk snapshot 904 quantifies the financial implications of triggered rules by measuring potential or realized monetary losses associated with alerts. For example, if a rule combination that detects a "rapid sequence of external transfers from new accounts" consistently flags transactions that result in unrecoverable losses exceeding $10,000, the amount at risk snapshot 904 highlights this rule combination's significant economic impact. By combining insights from both the amount at risk snapshot 904 and the rule effectiveness snapshot 902, a system can provide a comprehensive understanding of each rule's importance and detection accuracy.

Combining effectiveness metrics (such as true positive rates and false positive rates) with financial impact data (such as average loss amounts per fraud incident), the combined performance snapshot 906 evaluates each rule using the criteria together. For example, when a rule shows a 90% true positive rate but only identifies low-value fraud incidents averaging $100 in losses, it may receive a lower risk score than a rule with a 70% true positive rate that identifies high-value fraud incidents averaging $10,000 in losses. This multi-criteria evaluation allows the system to calibrate risk score adjustments based on both the rule's accuracy in detecting fraud and the monetary significance of the fraud it detects.

In some aspects, stacked history 908 refers to performance snapshots across multiple timeframes (e.g., daily, weekly, and monthly intervals). The stacked history 908 may organize effectiveness metrics, financial impact data, and combined performance indicators chronologically, enabling the system to identify performance trends, seasonal patterns, and evolutionary changes in rule effectiveness.

In some aspects, short-term view 910 analyzes recent performance data, for example spanning the previous 30 days, to identify emerging fraud patterns and sudden changes in effectiveness. For example, if a rule combination shows a sharp increase in true positives over the past week, the short-term view 910 enables rapid risk score adjustment to utilize this improved detection capability.

In some aspects, long-term view 912 analyzes extended performance periods (e.g., six months to one year) to establish baseline effectiveness and, in some instances, identify long-term patterns. By comparing short-term variations against long-term trends, the system can differentiate between temporary anomalies and underlying shifts in fraud patterns.

In some aspects, the risk score adjustment 914 processes inputs from both short-term view 910 and long-term view 912, utilizing the temporal analysis capabilities of stacked history 908 and the multidimensional insights from combined performance snapshots 906. The system may incrementally increase risk scores for rule combinations demonstrating effectiveness across multiple timeframes while decreasing scores for rules showing deteriorating performance despite short-term success. For example, suppose that over the past six months, a particular combination of three rules showed a stable historical fraud rate of 50%. In some aspects, more recent data may reveal that fewer recent fraud cases map onto this exact combination, which may drop the combination's effective historical fraud rate to 30%. At the risk score adjustment 914, this new combination-specific metric may be used to lower the risk score for that set of triggers. If another combination's recalculated historical fraud rate increases (perhaps because the narrow overlap of conditions strongly correlates with serious confirmed fraud cases), at the risk score adjustment 914 the corresponding risk score can be increased.

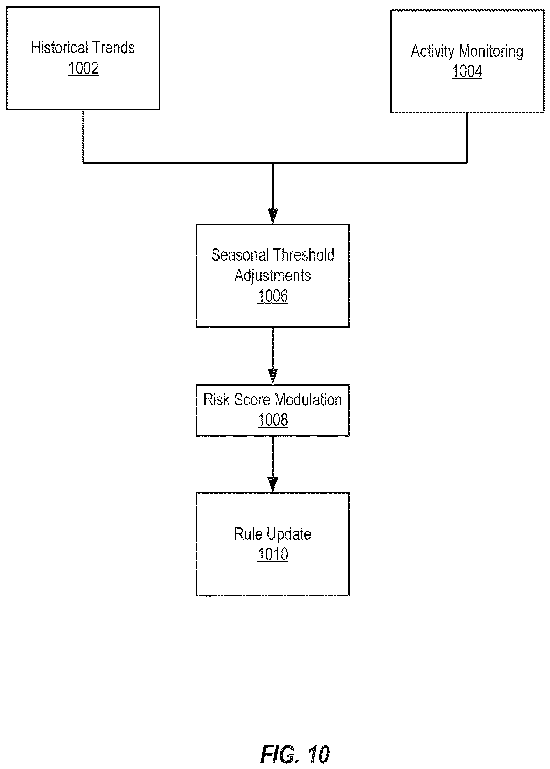

**FIG. 10** depicts a method for dynamically adjusting fraud detection rules based on seasonal patterns in accordance with examples of the present disclosure. In some examples, the process depicted in **FIG. 10** may combine historical trend analysis with real-time activity monitoring to modify detection thresholds and risk scores, enabling the system to adapt to cyclical variations in financial behavior.

In some aspects, historical trends 1002 comprises a database of long-term behavioral patterns and fraud outcomes. In some aspects, the database may include aggregated metrics from past fraud alerts, user behavior analytics, transaction volume data, and confirmed fraud cases associated with temporal events. For example, historical trends 1002 may identify patterns such as increased large deposits during tax season or elevated account creation rates during promotional periods. Analysis of these historical trends may enable the system to model expected seasonal variations.

In some aspects, activity monitoring 1004 may implement a real-time analysis of current user and account behaviors. In some aspects, the monitoring system may track multiple variables including transaction volumes, authentication patterns, geolocation data, and inter-account transfers. For example, activity monitoring 1004 may detect an increase in high-value deposits and compare this pattern against seasonal norms as provided by historical trends 1002.

In some aspects, the seasonal threshold adjustments 1006 process inputs from both historical trends 1002 and activity monitoring 1004 to modify rule thresholds. That is, when historical data may indicate a predictable increase in legitimate high-value deposits during specific periods, thresholds for rules flagging large deposits may be temporarily adjusted. Alternatively, or in addition, during periods historically associated with increased fraud, thresholds may be implemented to increase detection sensitivity.

Thus, the risk score modulation 1008 may modify risk scores based on seasonal context and adjusted thresholds. Risk score modulation 1008 may reduce risk scores for behavior patterns that historical data shows to be expected during specific seasons and increase scores for patterns known to indicate heightened risk during specific periods. For example, if historical data shows certain transaction patterns are common during holidays, but suspicious in off-peak periods, the risk scores can be adjusted accordingly. In some aspects, the modified thresholds and risk scores may be integrated into an active rule set (e.g., rules portfolio 110 of **FIG. 10**) at the rule update block 1010.

In some aspects, recalculated, a combination-specific historical risk rate may be incorporated into a seasonal adjustment. For example, during the holiday season, a certain combination ("High-Value Withdrawal" + "New Account") may historically have shown a moderate risk rate. However, recalculating this combination's historical risk using season-specific datasets could reveal that, during holidays, many accounts meeting both conditions experienced confirmed fraud at a higher rate, for example 90%, when compared to non-holiday periods. In such a case, at risk score modulation 1008 these seasonally adjusted, combination-specific rates can be used to temporarily increase the risk weight of that particular rule combination. Conversely, if another rule combination's historical fraud correlation is reduced during a particular seasonal period, at the risk score modulation 1008 the risk-weighting could be reduced accordingly. Accordingly, the seasonal threshold adjustments can be more responsive to changes in individual rule triggers and also accurately reflect the unique combination patterns that are predictive of fraud during different times of the year and/or difference seasonal patterns.

### Example Machine Learning Architecture for Rule Generation

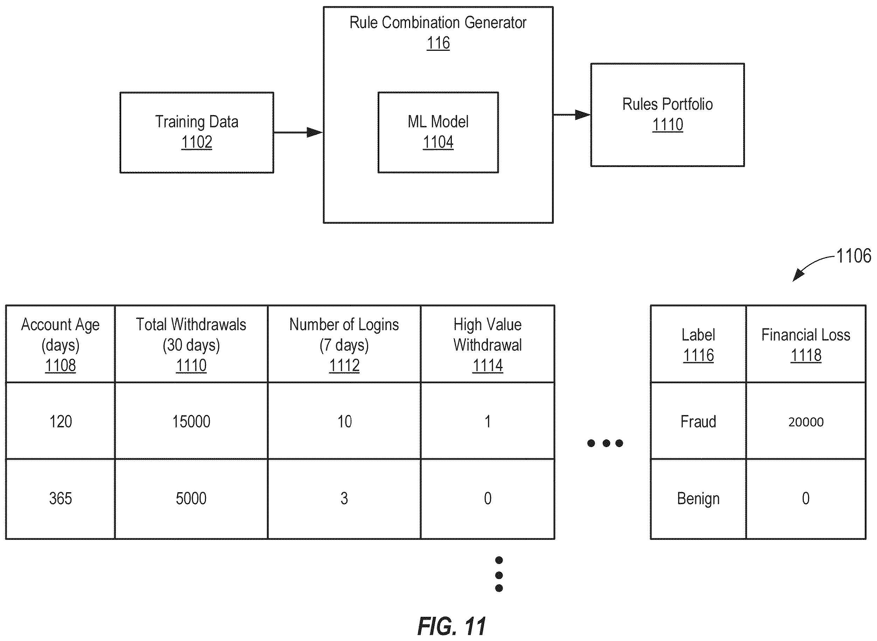

**FIG. 11** depicts a machine learning training architecture for generating rule combinations based on historical fraud data in accordance with examples of the present disclosure. In some aspects, the training data 1102 provides structured account and transaction data to an ML model 1104, which outputs refined rule combinations to a rules portfolio 1110. In some aspects, the training data 1102 may contain structured historical data, including both feature vectors and labeled outcomes. The training data 1102 may incorporate account metrics, transaction patterns, behavioral indicators, and verified fraud determinations. Each data record may include temporal features such as account age, recent withdrawal totals, authentication frequency, and transaction characteristics paired with binary fraud labels and associated loss amounts.

In some aspects, the ML model 1104 may implement pattern recognition logic within the rule combination generator 114. For example, the ML model 1104 may process training data 1102 to identify correlations between feature combinations and fraud outcomes. For example, the ML model 1104 may detect that the combination of account age < 90 days, withdrawal totals > $10,000 in 30 days, and login frequency > 5 per week correlates with increased fraud probability. These learned patterns may form the basis for generating multi-way combination rules.

In some aspects, the training dataset table 1106 illustrates the structured format of the training data. For example, the training dataset table 1106 may include an account age (days) of 1108, total withdrawals (30 days) of 1110 corresponding to an aggregated withdrawal amount over the 30-day window, a number of logins (7 days) 1112 corresponding to the authentication frequency over the 7-day window; whether there was a high-value withdrawal 1114 corresponding to binary indicator specific to large single transactions; training label 1116 corresponding to a binary fraud or benign classification; and a financial loss 1118 corresponding to a monetary impact of the fraudulent activity.

The training dataset table 1106 may include entries indicating the relationship between feature values and fraud outcomes. For instance, an account showing age=120 days, withdrawals=$15,000, logins=10, and high-value withdrawal=1 corresponds to a fraud label with $20,000 loss, while an account with age=365 days, withdrawals=$5,000, logins=3, and high-value withdrawal=0 is labeled benign with $0 loss. The ML model 1104 may process this structured training data to learn predictive feature combinations. These learned patterns are transformed into explicit rule combinations stored in rules portfolio 1110, enabling transparent, explainable fraud detection logic that can be validated and refined based on ongoing performance. In some aspects, ML model 1104 may implement various neural network architectures, including recurrent neural networks (RNNs), long short-term memory networks (LSTMs), or transformer models, selected based on their ability to process sequential financial data and capture temporal patterns in account behavior.

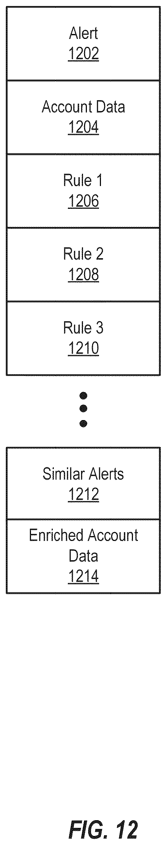

**FIG. 12** illustrates an example alert data structure and its associated contextual information in accordance with aspects of the present disclosure. In some aspects, alert 1202 links to account data 1204, triggering rules (1206, 1208, 1210), similar alerts 1212, and enriched account data 1214, providing a structured view of fraud indicators for investigation. In some aspects, alert 1202 comprises a notification object generated in response to potential fraudulent activity. For example, alert 1202 may be generated when rule combinations identify suspicious patterns, such as large withdrawals occurring in conjunction with logins from unusual locations.

In some aspects, account data 1204 may include account attributes linked to alert 1202, including but not limited to recent transaction history, account balance, account tenure, and authentication logs. The direct linking of account data 1204 to the alert enables human investigators to access relevant context associated with an alert without querying additional external systems. For example, if an account shows both recent creation (age < 30 days) and multiple high-value withdrawals, these linked attributes can provide immediate risk context.

Rules 1206, 1208, and 1210 represent the specific conditions that triggered alert 1202. For example, Rule 1206 may be a primary rule such as "High-Value Withdrawal," indicating a transaction exceeded defined thresholds. Rules 1208 and 1210 may be supporting rules, such as "Unusual IP Login" or "Account Age < 90 Days," which may increase an aggregate risk score associated with an alert. In some aspects, explicitly linking triggering rules may provide transparency in the alert generation logs.

In some aspects, similar alerts 1212 maintains references to historical alerts, and the sharing pattern matches the current alert. These references enable investigators to leverage previous case outcomes when assessing alert priority, with historically fraudulent patterns suggesting higher risk and historically benign patterns suggesting lower risk. In some aspects, enriched account data 1214 extends basic account data 1204 with additional risk indicators including device fingerprinting data, communication logs, and/or known fraud associations. For example, if enriched account data 1214 indicates that a login IP address links to previous fraud events, this may elevate the alert's priority for investigator review.

In some aspects, the technical components and architectures described above implement a fraud detection system that combines binary feature transformation, machine learning-based rule generation, and contextual alert prioritization. The fraud detection system may provide explainability through discrete binary indicators and documented rule combinations while using neural network architectures (including RNNs, LSTMs, and transformers) to identify complex fraud patterns. The integrated feedback mechanisms-incorporating investigation outcomes, seasonal threshold adjustments, and historical performance metrics-enable continuous refinement of detection logic.

### Example Method for Detecting Fraudulent Financial Activities

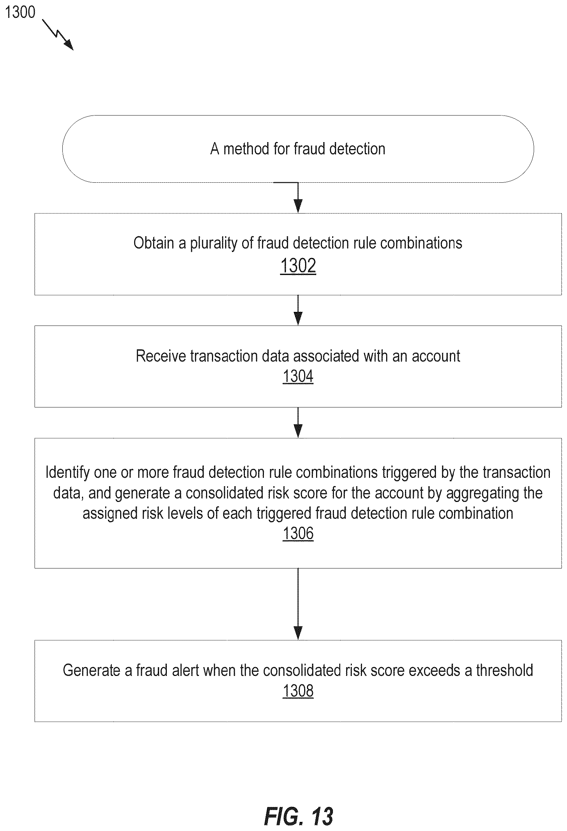

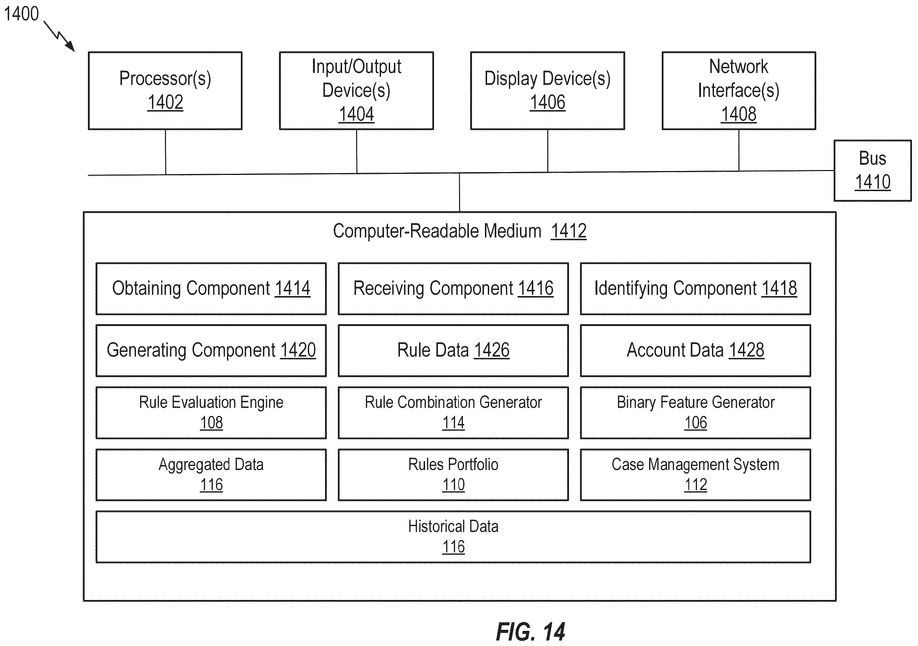

**FIG. 13** depicts an example method 1300 for detecting fraudulent financial activities. In one aspect, method 1300 can be implemented by the fraud detection and alert prioritization system 100 of **FIG. 1** and/or processing system 1400 of **FIG. 14****.**

Method 1300 starts at block 1302 with obtaining a plurality of fraud detection rule combinations, each fraud detection rule combination of the plurality of fraud detection rule combinations having an assigned risk level, wherein each fraud detection rule combination comprises a combination of two or more individual fraud detection rules. For example, as described with respect to **FIG. 2****,** these rule combinations may include both baseline rules (e.g., rules 204A-N) and multi-way combinations (e.g., combinations 206A-N) that are generated and refined based on historical fraud patterns.

Method 1300 continues to block 1304 with receiving transaction data associated with an account. As described in **FIG. 4****,** data may be processed through aggregator 408 to combine raw account data 402, transaction logs 404, and behavior metrics 406 into a unified dataset for analysis.

Method 1300 continues to block 1306 with identifying, from the plurality of fraud detection rule combinations, one or more fraud detection rule combinations triggered by the transaction data, and generating a consolidated risk score for the account by aggregating the assigned risk levels of each triggered fraud detection rule combination. As described with respect to **FIGS. 1** and **3****,** the rule evaluation engine 108 may evaluate the account's binary features against rules portfolio 302, with each triggered rule contributing a weighted risk value based on historical performance metrics.

Method 1300 continues to block 1308 with generating a fraud alert when the consolidated risk score exceeds a threshold, wherein the fraud alert includes an explanation identifying the one or more fraud detection rule combinations that contributed to the consolidated risk score. As detailed in **FIGS. 5-7****,** these alerts undergo prioritization and suppression before being presented to investigators through the case management system with contextual data as shown in **FIG. 12****.**

In some aspects, method 1300 further includes receiving feedback regarding a disposition of the fraud alert; and adjusting the assigned risk levels of the triggered one or more fraud detection rule combinations based on the received feedback.

In some aspects of method 1300, adjusting the assigned risk levels comprises increasing or decreasing the assigned risk levels based on a true or false fraud determination from the received feedback.

In some aspects, method 1300 further includes analyzing historical data and investigator feedback across multiple timeframes to identify patterns of false positive alerts; determining that specific rule combinations consistently generate false positive alerts by: tracking a false positive rate for each rule combination; comparing short-term and long-term performance metrics for each rule combination; and identifying rule combinations whose false positive rates exceed a threshold; and automatically adjusting risk scores for the identified rule combinations to reduce their influence on future alert generation.

In some aspects of method 1300, adjusting the assigned risk levels comprises modifying weights associated with the triggered fraud detection rule combinations based on the received feedback.

In some aspects of method 1300, generating the consolidated risk score comprises: identifying a set of fraud detection rule combinations triggered by the binary features; and determining a weighted contribution for each rule combination in the identified set based on historical data.

In some aspects of method 1300, the explanation includes a natural language explanation describing: the fraud detection rule combinations that triggered the alert; and the weighted contribution of each triggered rule combination to the consolidated risk score.

In some aspects of method 1300, the explanation includes: a primary triggered fraud detection rule combination having a highest weighted contribution; and one or more supporting triggered fraud detection rule combinations that increased the consolidated risk score.

In some aspects, method 1300 further includes monitoring transaction volume across accounts in the fraud detection system; detecting a surge in transaction activity exceeding normal volume levels; determining that current investigator capacity is insufficient to process the increased alert volume; and temporarily increasing alert thresholds to prioritize high-risk alerts during the surge period.

In some aspects of method 1300, the period of high transaction volume is identified based on seasonal transaction patterns, and the threshold is automatically adjusted during seasonal time periods.

In some aspects, method 1300 further includes tracking individual disposition statuses for each generated fraud alert; identifying accounts having at least one pending fraud alert disposition; and suppressing duplicate or lower-risk alerts for the identified accounts during the period of high transaction volume.

In some aspects, method 1300 further includes training an adaptive rule-based machine learning model using historical transaction data and known fraud outcomes to generate initial risk levels for the plurality of fraud detection rule combinations, wherein the trained adaptive rule-based machine learning model is configured to identify relationships between combinations of individual rules and likelihood of fraud.

In some aspects, method 1300 further includes receiving a new individual rule; combining the new individual rule with existing individual rules to create new fraud detection rule combinations; assigning initial risk levels to the new fraud detection rule combinations based on historical data; and adding the new fraud detection rule combinations to the plurality of fraud detection rule combinations.

In some aspects of method 1300, the assigned risk level is based on at least one of a historical fraud pattern, an account-specific factor, a temporal trend, or a behavioral pattern.

In some aspects, method 1300 provides several technical benefits that address challenges described above. For example, by converting complex transaction patterns into binary features evaluated against rule combinations, method 1300 enables efficient processing of large-scale financial data. As another example, method 1300 may maintain detection accuracy through continuous refinement of rule combinations based on historical outcomes, as described in **FIGS. 8-9****.** As another example, method 1300 may reduce false positives through intelligent alert prioritization and suppression mechanisms. As another example, method 1300 may adapt to seasonal variations through dynamic threshold adjustments as detailed in FIG. 10. Additionally, method 1300 may enhance explainability by decomposing fraud detection logic into discrete, understandable rule combinations while using machine learning capabilities as described in FIG. 11. Technical approaches described herein, provide a scalable, adaptive solution for identifying and prioritizing fraudulent activities while ensuring transparency and operational efficiency.

Note that FIG. **1300** is just one example of a method, and other methods including fewer, additional, or alternative operations are possible consistent with this disclosure.

### Example Processing System for Detecting Fraudulent Financial Activities

FIG. 14 depicts an example processing system 1400 configured to perform various aspects described herein, including, for example, method 1300 as described above with respect to FIG. 13.

Processing system 1400 is generally be an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 1400 includes one or more processors 1402, one or more input/output devices 1404, one or more display devices 1406, one or more network interfaces 1408 through which processing system 1400 is connected to one or more networks (e.g., a local network, an intranet, the Internet, or any other group of processing systems communicatively connected to each other), and computer-readable medium 1412. In the depicted example, the aforementioned components are coupled by a bus 1410, which may generally be configured for data exchange amongst the components. Bus 1410 may be representative of multiple buses, while only one is depicted for simplicity.

Processor(s) 1402 are generally configured to retrieve and execute instructions stored in one or more memories, including local memories like computer-readable medium 1412, as well as remote memories and data stores. Similarly, processor(s) 1402 are configured to store application data residing in local memories like the computer-readable medium 1412, as well as remote memories and data stores. More generally, bus 1410 is configured to transmit programming instructions and application data among the processor(s) 1402, display device(s) 1406, network interface(s) 1408, and/or computer-readable medium 1412. In certain embodiments, processor(s) 1402 are representative of a one or more central processing units (CPUs), graphics processing unit (GPUs), tensor processing unit (TPUs), accelerators, and other processing devices.

Input/output device(s) 1404 may include any device, mechanism, system, interactive display, and/or various other hardware and software components for communicating information between processing system 1400 and a user of processing system 1400. For example, input/output device(s) 1404 may include input hardware, such as a keyboard, touch screen, button, microphone, speaker, and/or other device for receiving inputs from the user and sending outputs to the user.

Display device(s) 1406 may generally include any sort of device configured to display data, information, graphics, user interface elements, and the like to a user. For example, display device(s) 1406 may include internal and external displays such as an internal display of a tablet computer or an external display for a server computer or a projector. Display device(s) 1406 may further include displays for devices, such as augmented, virtual, and/or extended reality devices. In various embodiments, display device(s) 1406 may be configured to display a graphical user interface.

Network interface(s) 1408 provide processing system 1400 with access to external networks and thereby to external processing systems. Network interface(s) 1408 can generally be any hardware and/or software capable of transmitting and/or receiving data via a wired or wireless network connection. Accordingly, network interface(s) 1408 can include a communication transceiver for sending and/or receiving any wired and/or wireless communication.

Computer-readable medium 1412 may be a volatile memory, such as a random access memory (RAM), or a nonvolatile memory, such as nonvolatile random access memory (NVRAM), or the like. In this example, computer-readable medium 1412 includes obtaining component 1414 configured to obtain fraud detection rule combinations, receiving component 1416 configured to receive transaction data, identifying component 1418 configured to identify triggered rule combinations and generate consolidated risk scores, and generating component 1420 configured to generate fraud alerts. Computer-readable medium 1412 also includes rule data 1426 storing rule combinations and their associated risk levels, and account data 1428 storing transaction and behavioral data for monitored accounts. Additionally, or alternatively, a computer-readable medium can include transient media such as carrier waves and transmission media.

In certain embodiments, obtaining component 1414 is configured to obtain the fraud detection rule combinations as described with respect to block 1302 of FIG. 13 and further detailed in FIGS. 2-3. Receiving component 1416 is configured to receive transaction data as described with respect to block 1304 of FIG. 13 and the aggregation process of FIG. 4. Identifying component 1418 is configured to identify triggered rules and generate risk scores as described with respect to block 1306 of FIG. 13 and the evaluation process shown in FIGS. 5-6. Generating component 1420 is configured to generate fraud alerts as described with respect to block 1308 of FIG. 13 and the alert processing shown in FIGS. 7-12. In some aspects, the computer-readable medium 1412 may include rule data 1426 which may be the same as or similar to the rules 104 of FIG. 1, aggregated data 102, rule evaluation engine 108, rule combination generator 114, binary feature generator 106, rules portfolio 110, case management system 112, and historical data 116.

Note that FIG. 14 is just one example of a processing system consistent with aspects described herein, and other processing systems having additional, alternative, or fewer components are possible consistent with this disclosure.

FIG. 15 depicts an example user interface 1500 for presenting fraud alerts within a case management system in accordance with aspects of the present disclosure. In some aspects, fraud alerts may be organized in a structured, tabular format, enabling human investigators to efficiently identify and review alerts of interest. The user interface 1500 may include a plurality of columns, such as a rank column 1502, an identifier column 1504, a rule column 1506, a risk score column 1508, and a loss potential column 1510. Each column provides a distinct attribute associated with a given fraud alert.

In some aspects, the rank column 1502 may display a priority order or sorted listing of alerts, placing the most critical or high-risk alerts at the top. The identifier column 1504 may present a unique alphanumeric code (e.g., "45AB828EF29A4") associated with a particular alert, facilitating tracking and cross-referencing within the system. The rule column 1506 may display a numeric or descriptive code referring to the baseline or multi-way rule combinations that triggered the alert. The risk score column 1508 may indicate the calculated risk level of the alert, derived from various weighted factors and historical correlations. The loss potential column 1510 may represent the estimated financial exposure or monetary value at stake should the suspicious activity prove to be fraudulent.

As depicted in FIG. 15, selecting a particular alert entry (e.g., the alert corresponding to "45AB828EF29A4" in the top row) may reveal an expanded view 1512. This expanded view 1512 provides contextual information related to the selected alert, which may include a descriptive label (e.g., "Fraud Alert - Risk Score 90"), the specific combination of rules triggered (e.g., "Rule 92: High-Value Withdrawal + Unusual IP Login"), and other supplementary data. A visual indicator 1514, such as a map or graphical representation of the IP address origin, may be provided to show the geographic location from which the suspicious login occurred. Further, the expanded view 1512 may present related information 1516, such as linked alerts or associated accounts, and display an estimated loss potential (e.g., $21,000) for the activity under review.

The user interface 1500 may also include interactive elements 1518, such as selectable options or buttons ("Benign" or "Take Action"), enabling investigators to quickly classify the alert's status or initiate additional verification steps. By presenting alerts in a ranked and easily navigable form, along with contextual and actionable details, the user interface 1500 helps investigators efficiently assess the severity of suspected fraud, prioritize their investigative efforts, and take timely actions to mitigate potential losses.

Thus, from one perspective, there has now been described a method for fraud detection. The method may include obtaining a plurality of fraud detection rule combinations, each fraud detection rule combination of the plurality of fraud detection rule combinations having an assigned risk level, wherein each fraud detection rule combination comprises a combination of two or more individual fraud detection rules; receiving transaction data associated with an account; identifying, from the plurality of fraud detection rule combinations, one or more fraud detection rule combinations triggered by the transaction data, and generating a consolidated risk score for the account by aggregating the assigned risk levels of each triggered fraud detection rule combination; and generating a fraud alert when the consolidated risk score exceeds a threshold, wherein the fraud alert includes an explanation identifying the one or more fraud detection rule combinations that contributed to the consolidated risk score.

### Example Clauses

Implementation examples are described in the following numbered clauses:
Clause 1: A method for fraud detection, comprising: obtaining a plurality of fraud detection rule combinations, each fraud detection rule combination of the plurality of fraud detection rule combinations having an assigned risk level, wherein each fraud detection rule combination comprises a combination of two or more individual fraud detection rules; receiving transaction data associated with an account; identifying, from the plurality of fraud detection rule combinations, one or more fraud detection rule combinations triggered by the transaction data, and generating a consolidated risk score for the account by aggregating the assigned risk levels of each triggered fraud detection rule combination; and generating a fraud alert when the consolidated risk score exceeds a threshold, wherein the fraud alert includes an explanation identifying the one or more fraud detection rule combinations that contributed to the consolidated risk score.
Clause 2: The method of Clause 1, further comprising: receiving feedback regarding a disposition of the fraud alert; and adjusting the assigned risk level of at least one fraud detection rule combination of the plurality of fraud detection rule combinations based on the received feedback.
Clause 3: The method of Clause 2, wherein adjusting the assigned risk level comprises increasing or decreasing the assigned risk level based on a true or false fraud determination from the received feedback.
Clause 4: The method of Clause 3, further comprising: analyzing historical data and investigator feedback across multiple timeframes to identify patterns of false positive alerts; determining that specific rule combinations generate false positive alerts by: tracking a false positive rate for each fraud detection rule combination; comparing short-term and long-term performance metrics for each fraud detection rule combination; and identifying fraud detection rule combinations having false positive rates that exceed a threshold; and adjusting risk scores for the identified fraud detection rule combinations to reduce an influence on future alert generation.
Clause 5: The method of any of Clauses 2-4, wherein adjusting the assigned risk level comprises modifying weights associated with the one or more fraud detection rule combinations triggered by the transaction data based on the received feedback.
Clause 6: The method of any of Clauses 1-5, wherein generating the consolidated risk score comprises: identifying a set of fraud detection rules triggered by the one or more fraud detection rule combinations; and determining a weighted contribution for each fraud detection rule in the identified set based on historical data.
Clause 7: The method of Clause 6, wherein the explanation includes a natural language explanation describing: the triggered fraud detection rule combination that triggered the alert; and the weighted contribution of each triggered rule combination to the consolidated risk score.
Clause 8: The method of any of Clauses 1-7, wherein the explanation includes: a primary triggered fraud detection rule combination having a highest weighted contribution; and one or more supporting triggered fraud detection rule combinations that increased the consolidated risk score.
Clause 9: The method of any of Clauses 1-8, further comprising: monitoring transaction volume across accounts in a fraud detection system; detecting a surge in transaction activity exceeding first volume levels; determining that current investigator capacity is insufficient to process increased alert volume; and temporarily increasing alert thresholds to prioritize high-risk alerts during a surge period.
Clause 10: The method of Clause 9, wherein the surge in transaction activity is detected based on seasonal transaction patterns, and wherein the threshold is automatically adjusted during seasonal time periods.
Clause 11: The method of Clause 9, further comprising: tracking individual disposition status for each generated fraud alert; identifying accounts having at least one pending fraud alert disposition; and suppressing at least one of duplicate or lower-risk alerts for the identified accounts during the surge in transaction act.
Clause 12: The method of any of Clauses 1-11, further comprising training an adaptive rule-based machine learning model using historical transaction data and known fraud outcomes to generate initial risk levels for the plurality of fraud detection rule combinations, wherein the trained adaptive rule-based machine learning model is configured to identify relationships between combinations of individual fraud detection rules and likelihood of fraud.
Clause 13: The method of any of Clauses 1-12, further comprising: receiving a new individual fraud detection rule; combining the new individual fraud detection rule with existing individual fraud detection rules to create new fraud detection rule combinations; assigning initial risk levels to the new fraud detection rule combinations based on historical data; and adding the new fraud detection rule combinations to the plurality of fraud detection rule combinations.
Clause 14: The method of any of Clauses 1-13, wherein the assigned risk level is based on at least one of a historical fraud pattern, an account-specific factor, a temporal trend, or a behavioral pattern.
Clause 15: A processing system, comprising: a memory comprising computer-executable instructions; and a processor configured to execute the computer-executable instructions and cause the processing system to perform a method in accordance with any one of Clauses 1-14.
Clause 16: A processing system, comprising means for performing a method in accordance with any one of Clauses 1-14.
Clause 17: A computer-readable medium encoding program code for causing a processing system to perform the steps of any one of Clauses 1-14.
Clause 18: A computer program product embodied on a computer-readable storage medium comprising code for performing a method in accordance with any one of Clauses 1-14.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered clauses:
1. A method for fraud detection, the method comprising:
   obtaining a plurality of fraud detection rule combinations, each fraud detection rule combination of the plurality of fraud detection rule combinations having an assigned risk level, wherein each fraud detection rule combination comprises a combination of two or more individual fraud detection rules;
   receiving transaction data associated with an account;
   identifying, from the plurality of fraud detection rule combinations, one or more fraud detection rule combinations triggered by the transaction data, and generating a consolidated risk score for the account by aggregating the assigned risk levels of each triggered fraud detection rule combination; and
   generating a fraud alert when the consolidated risk score exceeds a threshold, wherein the fraud alert includes an explanation identifying the one or more fraud detection rule combinations that contributed to the consolidated risk score.
2. The method of clause 1, further comprising:
   receiving feedback regarding a disposition of the fraud alert; and
   adjusting the assigned risk level of at least one fraud detection rule combination of the plurality of fraud detection rule combinations based on the received feedback.
3. The method of clause 2, wherein adjusting the assigned risk level comprises increasing or decreasing the assigned risk level based on a true or false fraud determination from the received feedback.
4. The method of clause 3, further comprising:
   analyzing historical data and investigator feedback across multiple timeframes to identify patterns of false positive alerts;
   determining that specific fraud detection rule combinations generate false positive alerts by:
      tracking a false positive rate for each fraud detection rule combination;
      comparing short-term and long-term performance metrics for each fraud detection rule combination; and
      identifying fraud detection rule combinations having false positive rates that exceed a threshold; and
   adjusting risk scores for the identified fraud detection rule combinations to reduce an influence on future alert generation.
5. The method of any of clauses 2 to 4, wherein adjusting the assigned risk level comprises modifying weights associated with the one or more fraud detection rule combinations triggered by the transaction data based on the received feedback.
6. The method of any preceding clause, wherein generating the consolidated risk score comprises:
   identifying a set of fraud detection rules triggered by the one or more fraud detection rule combinations; and
   determining a weighted contribution for each fraud detection rule in the identified set based on historical data.
7. The method of clause 6, wherein the explanation includes a natural language explanation describing:
   the triggered fraud detection rule combination that triggered the alert; and
   the weighted contribution of each triggered rule combination to the consolidated risk score.
8. The method of any preceding clause, wherein the explanation includes:
   a primary triggered fraud detection rule combination having a highest weighted contribution; and
   one or more supporting triggered fraud detection rule combinations that increased the consolidated risk score.
9. The method of any preceding clause, further comprising:
   monitoring transaction volume across accounts in a fraud detection system;
   detecting a surge in transaction activity exceeding first volume levels;
   determining that current investigator capacity is insufficient to process increased alert volume; and
   temporarily increasing alert thresholds to prioritize high-risk alerts during a surge period.
10. The method of clause 9, wherein the surge in transaction activity is detected based on seasonal transaction patterns, and wherein the threshold is automatically adjusted during seasonal time periods.
11. The method of clause 9 or clause 10, further comprising:
   tracking individual disposition status for each generated fraud alert;
   identifying accounts having at least one pending fraud alert disposition; and
   suppressing at least one of duplicate or lower-risk alerts for the identified accounts during the surge in transaction activity.
12. The method of any preceding clause, further comprising training an adaptive rule-based machine learning model using historical transaction data and known fraud outcomes to generate initial risk levels for the plurality of fraud detection rule combinations, wherein the trained adaptive rule-based machine learning model is configured to identify relationships between combinations of individual fraud detection rules and likelihood of fraud.
13. The method of any preceding clause, further comprising:
   receiving a new individual fraud detection rule;
   combining the new individual fraud detection rule with existing individual fraud detection rules to create new fraud detection rule combinations;
   assigning initial risk levels to the new fraud detection rule combinations based on historical data; and
   adding the new fraud detection rule combinations to the plurality of fraud detection rule combinations.
14. The method of any preceding clause, wherein the assigned risk level is based on at least one of a historical fraud pattern, an account-specific factor, a temporal trend, or a behavioral pattern.
15. A processing system, comprising: a memory comprising computer-executable instructions;
   and a processor configured to execute the computer-executable instructions and cause the processing system to:
   obtain a plurality of fraud detection rule combinations, each fraud detection rule combination of the plurality of fraud detection rule combinations having an assigned risk level, wherein each fraud detection rule combination comprises a combination of two or more individual fraud detection rules;
   receive transaction data associated with an account;
   identify, from the plurality of fraud detection rule combinations, one or more fraud detection rule combinations triggered by the transaction data, and generate a consolidated risk score for the account by aggregating the assigned risk levels of each triggered fraud detection rule combination; and
   generate a fraud alert when the consolidated risk score exceeds a threshold, wherein the fraud alert includes an explanation identifying the one or more fraud detection rule combinations that contributed to the consolidated risk score.
16. The processing system of clause 15, wherein the processor is further configured to cause the processing system to:
   receive feedback regarding a disposition of the fraud alert; and
   adjust the assigned risk level of at least one fraud detection rule combination of the plurality of fraud detection rule combinations based on the received feedback.
17. The processing system of clause 16, wherein to adjust the assigned risk level comprises to increase or decrease the assigned risk level based on a true or false fraud determination from the received feedback.
18. The processing system of clause 17, wherein the processor is further configured to cause the processing system to:
   analyze historical data and investigator feedback across multiple timeframes to identify patterns of false positive alerts;
   determine that specific fraud detection rule combinations generate false positive alerts; and
   adjust risk scores for the one or more fraud detection rule combinations triggered by the transaction data to reduce an influence on future alert generation.
19. The processing system of any of clauses 16 to 18, wherein to adjust the assigned risk level comprises to modify weights associated with the one or more fraud detection rule combinations triggered by the transaction data based on the received feedback.
20. A method for adapting fraud detection rules, the method comprising:
   receiving historical alert data comprising a plurality of fraud alerts and corresponding investigator feedback for each fraud alert of the plurality of fraud alerts;
   analyzing the historical alert data across multiple timeframes to identify patterns of false positive alerts;
   determining performance metrics for fraud detection rule combinations by:
      tracking a false positive rate for each rule combination;
      comparing short-term and long-term effectiveness of each rule combination; and
      identifying rule combinations whose false positive rates exceed a threshold;
   adjusting risk scores assigned to the identified rule combinations based on the determined performance metrics;
   detecting a seasonal transaction pattern in the historical alert data;
   automatically modifying alert generation thresholds during time periods matching the detected seasonal transaction pattern; and
   suppressing alerts generated by rule combinations having adjusted risk scores below a dynamic threshold during the time periods matching the detected seasonal transaction pattern.

## Claims

1. A method for fraud detection, the method comprising:
obtaining a plurality of fraud detection rule combinations, each fraud detection rule combination of the plurality of fraud detection rule combinations having an assigned risk level, wherein each fraud detection rule combination comprises a combination of two or more individual fraud detection rules;
receiving transaction data associated with an account;
identifying, from the plurality of fraud detection rule combinations, one or more fraud detection rule combinations triggered by the transaction data, and generating a consolidated risk score for the account by aggregating the assigned risk levels of each triggered fraud detection rule combination; and
generating a fraud alert when the consolidated risk score exceeds a threshold, wherein the fraud alert includes an explanation identifying the one or more fraud detection rule combinations that contributed to the consolidated risk score.

2. The method of claim 1, further comprising:
receiving feedback regarding a disposition of the fraud alert; and
adjusting the assigned risk level of at least one fraud detection rule combination of the plurality of fraud detection rule combinations based on the received feedback.

3. The method of claim 2, wherein adjusting the assigned risk level comprises increasing or decreasing the assigned risk level based on a true or false fraud determination from the received feedback.

4. The method of claim 3, further comprising:
analyzing historical data and investigator feedback across multiple timeframes to identify patterns of false positive alerts;
determining that specific fraud detection rule combinations generate false positive alerts by:
tracking a false positive rate for each fraud detection rule combination;
comparing short-term and long-term performance metrics for each fraud detection rule combination; and
identifying fraud detection rule combinations having false positive rates that exceed a threshold; and
adjusting risk scores for the identified fraud detection rule combinations to reduce an influence on future alert generation.

5. The method of any of claims 2 to 4, wherein adjusting the assigned risk level comprises modifying weights associated with the one or more fraud detection rule combinations triggered by the transaction data based on the received feedback.

6. The method of any preceding claim, wherein generating the consolidated risk score comprises:
identifying a set of fraud detection rules triggered by the one or more fraud detection rule combinations; and
determining a weighted contribution for each fraud detection rule in the identified set based on historical data.

7. The method of claim 6, wherein the explanation includes a natural language explanation describing:
the triggered fraud detection rule combination that triggered the alert; and
the weighted contribution of each triggered rule combination to the consolidated risk score.

8. The method of any preceding claim, wherein the explanation includes:
a primary triggered fraud detection rule combination having a highest weighted contribution; and
one or more supporting triggered fraud detection rule combinations that increased the consolidated risk score.

9. The method of any preceding claim, further comprising:
monitoring transaction volume across accounts in a fraud detection system;
detecting a surge in transaction activity exceeding first volume levels;
determining that current investigator capacity is insufficient to process increased alert volume; and
temporarily increasing alert thresholds to prioritize high-risk alerts during a surge period.

10. The method of claim 9, wherein the surge in transaction activity is detected based on seasonal transaction patterns, and wherein the threshold is automatically adjusted during seasonal time periods.

11. The method of claim 9 or claim 10, further comprising:
tracking individual disposition status for each generated fraud alert;
identifying accounts having at least one pending fraud alert disposition; and
suppressing at least one of duplicate or lower-risk alerts for the identified accounts during the surge in transaction activity.

12. The method of any preceding claim, further comprising training an adaptive rule-based machine learning model using historical transaction data and known fraud outcomes to generate initial risk levels for the plurality of fraud detection rule combinations, wherein the trained adaptive rule-based machine learning model is configured to identify relationships between combinations of individual fraud detection rules and likelihood of fraud.

13. The method of any preceding claim, further comprising:
receiving a new individual fraud detection rule;
combining the new individual fraud detection rule with existing individual fraud detection rules to create new fraud detection rule combinations;
assigning initial risk levels to the new fraud detection rule combinations based on historical data; and
adding the new fraud detection rule combinations to the plurality of fraud detection rule combinations.

14. A processing system, comprising: a memory comprising computer-executable instructions; and a processor configured to execute the computer-executable instructions and cause the processing system to:
obtain a plurality of fraud detection rule combinations, each fraud detection rule combination of the plurality of fraud detection rule combinations having an assigned risk level, wherein each fraud detection rule combination comprises a combination of two or more individual fraud detection rules;
receive transaction data associated with an account;
identify, from the plurality of fraud detection rule combinations, one or more fraud detection rule combinations triggered by the transaction data, and generate a consolidated risk score for the account by aggregating the assigned risk levels of each triggered fraud detection rule combination; and
generate a fraud alert when the consolidated risk score exceeds a threshold, wherein the fraud alert includes an explanation identifying the one or more fraud detection rule combinations that contributed to the consolidated risk score.

15. A method for adapting fraud detection rules, the method comprising:
receiving historical alert data comprising a plurality of fraud alerts and corresponding investigator feedback for each fraud alert of the plurality of fraud alerts;
analyzing the historical alert data across multiple timeframes to identify patterns of false positive alerts;
determining performance metrics for fraud detection rule combinations by:
tracking a false positive rate for each rule combination;
comparing short-term and long-term effectiveness of each rule combination; and
identifying rule combinations whose false positive rates exceed a threshold;
adjusting risk scores assigned to the identified rule combinations based on the determined performance metrics;
detecting a seasonal transaction pattern in the historical alert data;
automatically modifying alert generation thresholds during time periods matching the detected seasonal transaction pattern; and
suppressing alerts generated by rule combinations having adjusted risk scores below a dynamic threshold during the time periods matching the detected seasonal transaction pattern.
